# EUROPEAN PATENT SPECIFICATION

(11) **EP 4 604 036 B1**
(45) Date of publication and mention of the grant of the patent: **08.07.2026**
(21) Application number: 23877280.0
(22) Date of filing: 10.10.2023
(51) Int. Cl.: G06Q 10/083, G06Q 10/0833, G06Q 30/018

(54) **BLOCKCHAIN NETWORK SYSTEM, TRACEABILITY MANAGEMENT SYSTEM, AND METHOD**
BLOCKCHAIN-NETZWERKSYSTEM, VERFOLGBARKEITSVERWALTUNGSSYSTEM UND VERFAHREN
SYSTÈME DE RÉSEAU DE CHAÎNE DE BLOCS, SYSTÈME DE GESTION DE TRAÇABILITÉ ET PROCÉDÉ

(30) Priority: 11.10.2022 JP 2022163488
(43) Date of publication of application: 20.08.2025
(73) Proprietor: NEC Communication Systems, Ltd., Minato-ku Tokyo 108-0073 (JP)
(72) Inventor: KAMATA, Norihiko, Tokyo 108-0073 (JP)
(74) Representative: Betten & Resch
(86) International application number: PCT/JP2023/036732
(87) International publication number: WO 2024/080277

(56) References cited:
- WO-A1-2021/002284
- WO-A1-2022/092278
- CN-A- 107 332 701
- CN-A- 111 062 730
- CN-A- 112 884 495
- CN-A- 114 255 047
- US-A1- 2018 341 910
- US-B2- 11 037 095

## Description

### TECHNICAL FIELD

The present invention relates to a blockchain network system, traceability management system, and method.

### BACKGROUND

There is a traceability management system that allows for collecting, managing, and tracing various information related to the production, processing, or distribution of target items. For instance, there are centralized traceability management systems that use servers (for instance, refer to Patent Literatures 1 to 7). There are also decentralized traceability management systems that utilize blockchain network systems to make it difficult to falsify or delete information, which is a challenge faced by centralized traceability management systems (for instance, refer to Patent Literatures 8 and 9). Further, there are decentralized traceability management systems that execute a predetermined smart contract within a blockchain network system to monitor data deficiencies or errors related to various information collected from nodes (for instance, refer to Patent Literatures 10 and 11).

### CITATION LIST

### PATENT LITERATURE

Patent Literature 1
   Japanese Patent Kokai Publication No. JP-P2004-171398A
Patent Literature 2
   Japanese Patent Kokai Publication No. JP-P2004-213477A
Patent Literature 3
   Japanese Patent Kokai Publication No. JP-P2004-315154A
Patent Literature 4
   Japanese Patent Kokai Publication No. JP-P2005-160391A
Patent Literature 5
   Japanese Patent Kokai Publication No. JP-P2005-196507A
Patent Literature 6
   Japanese Patent Kokai Publication No. JP-P2005-251079A
Patent Literature 7
   Japanese Patent Kokai Publication No. JP-P2005-267153A
Patent Literature 8
   Japanese Patent Kokai Publication No. JP-P2019-079253A
Patent Literature 9
   Japanese Patent Kokai Publication No. JP-P2020-144804A
Patent Literature 10
   Japanese Patent Kohyo Publication No. JP-P2020-515092A
Patent Literature 11
   Japanese Patent Kohyo Publication No. JP-P2022-517436A
Patent Literature 12
   Chinese Patent Publication No. CN111062730A.

### SUMMARY

### TECHNICAL PROBLEM

The following analysis is provided by the inventor of the present invention.

In the traceability management systems relating to Patent Literatures 10 and 11, it is difficult to objectively, neutrally, fairly and impartially verify the inherent state of data (evaluation, fraudulence, falsification, etc.) even when various information collected is sufficient and error-free. In other words, the inherent state of data tends to vary depending on the knowledge of the person verifying it, making it difficult to assess it objectively, neutrally, fairly, and impartially. Therefore, what is desired is a system that allows one to verify the inherent state of data objectively, neutrally, fairly, impartially, and easily when tracing collected information.

It is a main object of the present invention to provide a blockchain network system, traceability management system, and method that can contribute to verifying inherent state(s) of data objectively, neutrally, fairly, impartially, and easily when tracing collected information.

### SOLUTION TO PROBLEM

A blockchain network system relating to a first aspect is a blockchain network system configured to have nodes connected to each other in a network and have the nodes distributedly hold same information related to target item(s), wherein the nodes are comprised of: a plurality of dedicated nodes responsible for predetermined roles; a role assignment node configured to store a role database that defines a role corresponding to each of the dedicated nodes and assign a role to each of the dedicated nodes on the basis of the role database to connect each of the dedicated nodes to at least one corresponding terminal outside the blockchain network system; and a state change monitoring node configured to store a state change rule database that defines rule(s) regarding change in a state of the target item(s) between a time of receipt and a time of shipment, receive information from the terminal(s) via the dedicated node(s), and monitor change in the state of the target item(s) by determining whether or not a state change(s) based on corresponding receiving and shipping information in supplied information satisfies/satisfy the state change rule(s).

A blockchain network system relating to a second aspect is a blockchain network system configured to have nodes connected to each other in a network and have the nodes distributedly hold same information related to target item(s), wherein the nodes are comprised of: a plurality of dedicated nodes responsible for predetermined roles; a role assignment node configured to store a role database that defines a role corresponding to each of the dedicated nodes and assign a role to each of the dedicated nodes on the basis of the role database to connect each of the dedicated nodes to at least one corresponding terminal outside the blockchain network system; and a distribution route monitoring node configured to store a distribution route rule database that defines distribution route rule(s) with respect to combination(s) of shipping origin(s) and shipping destination(s), receive information from terminal(s) via the dedicated node(s), and monitor distribution route(s) of the target item(s) by determining whether or not a combination(s) of shipping origin and destination included in shipping information and/or receiving information in supplied information satisfies/satisfy the distribution route rule(s).

A blockchain network system relating to a third aspect is a blockchain network system configured to have nodes connected to each other in a network and have the nodes distributedly hold same information related to target item(s), wherein the nodes are comprised of: a plurality of dedicated nodes responsible for predetermined roles; and a role assignment node configured to store a role database that defines a role corresponding to each of the dedicated nodes and assign a role to each of the dedicated nodes on the basis of the role database to connect each of the dedicated nodes to at least one corresponding terminal outside the blockchain network system, and at least one of the dedicated nodes is configured to be assigned to a role related to an audit institution(s) by the role assignment node, store an evaluation criterion database that associates condition(s) with evaluation(s) regarding predetermined evaluation target(s), receive the information from the terminal(s) via the dedicated nodes other than the dedicated node assigned to the role related to the audit institution(s), and evaluate evaluation target(s) in supplied information on the basis of evaluation criterion database.

A blockchain network system relating to a fourth aspect is a blockchain network system configured to have nodes connected to each other in a network and have the nodes distributedly hold same information related to target item(s), wherein the nodes are comprised of: a plurality of dedicated nodes responsible for predetermined roles; and a role assignment node configured to store a role database that defines a role corresponding to each of the dedicated nodes and assign a role to each of the dedicated nodes on the basis of the role database to connect each of the dedicated nodes to at least one corresponding terminal outside the blockchain network system.

A traceability management system relating to a fifth aspect comprises: a blockchain network system relating to the first aspect; a role management terminal configured to be connected to the role assignment node; and a plurality of terminals configured to be connected to corresponding ones of the dedicated nodes assigned to roles by the role management terminal.

A traceability management method relating to a sixth aspect is a traceability management method of a blockchain network system, configured to have nodes connected to each other in a network and have the nodes distributedly hold same information related to target item(s), for performing traceability management, wherein the nodes are comprised of: a plurality of dedicated nodes responsible for predetermined roles; a role assignment node configured to store a role database that defines a role corresponding to each of the dedicated nodes; and a state change monitoring node configured to store a state change rule database that defines rule(s) regarding change in the state of the target item(s) between the time of receipt and the time of shipment, and the traceability management method includes: a step of having the role assignment node assign a role to each of the dedicated nodes on the basis of the role database to connect each of the dedicated nodes to at least one corresponding terminal outside the blockchain network system; a step of supplying the information from the terminal(s) to the state change monitoring node via the dedicated node(s) assigned to role(s) by the role assignment node; and a step of having the state change monitoring node monitor change in the state of the target item(s) by determining whether or not a state change(s) based on corresponding receiving and shipping information in the supplied information satisfies/satisfy the state change rule(s).

A traceability management method relating to a seventh aspect is a traceability management method of a blockchain network system, configured to have nodes connected to each other in a network and have the nodes distributedly hold same information related to target item(s), for performing traceability management, wherein the nodes are comprised of: a plurality of dedicated nodes responsible for predetermined roles; a role assignment node configured to store a role database that defines a role corresponding to each of the dedicated nodes; and a distribution route monitoring node configured to store a distribution route rule database that defines distribution route rule(s) with respect to combination(s) of shipping origin(s) and shipping destination(s), and the traceability management method includes: a step of having the role assignment node assign a role to each of the dedicated nodes on the basis of the role database to connect each of the dedicated nodes to at least one corresponding terminal outside the blockchain network system; a step of supplying the information from the terminal(s) to the distribution route monitoring node via the dedicated node(s) assigned to role(s) by the role assignment node; and a step of having the distribution route monitoring node monitor distribution route(s) of the target item(s) by determining whether or not a combination(s) of shipping origin and destination included in shipping information and/or receiving information in the supplied information satisfies/satisfy the distribution route rule(s).

A traceability management method relating to an eighth aspect is a traceability management method of a blockchain network system, configured to have nodes connected to each other in a network and have the nodes distributedly hold same information related to target item(s), for performing traceability management, wherein the nodes are comprised of: a plurality of dedicated nodes responsible for predetermined roles; and a role assignment node configured to store a role database that defines a role corresponding to each of the dedicated nodes, and the traceability management method includes: a step of having the role assignment node assign a role to each of the dedicated nodes on the basis of the role database to connect each of the dedicated nodes to at least one corresponding terminal outside the blockchain network system; a step of having the dedicated node assigned to a role related to an audit institution(s) by the role assignment node store an evaluation criterion database that associates condition(s) with evaluation(s) regarding predetermined evaluation target(s); a step of supplying to the dedicated node assigned to the role related to the audit institution(s) the information from the terminal(s) via the dedicated nodes other than the dedicated node assigned to the role related to the audit institution(s); and a step of having the dedicated node assigned to the role related to the audit institution(s) evaluate evaluation target(s) in the supplied information on the basis of the evaluation criterion database.

A traceability management method relating to a ninth aspect is a traceability management method of a blockchain network system, configured to have nodes connected to each other in a network and have the nodes distributedly hold same information related to target item(s), for performing traceability management, wherein the nodes are comprised of: a plurality of dedicated nodes responsible for predetermined roles; and a role assignment node configured to store a role database that defines a role corresponding to each of the dedicated nodes, and the traceability management method comprises having the role assignment node assign a role to each of the dedicated nodes on the basis of the role database to connect each of the dedicated nodes to at least one corresponding terminal outside the blockchain network system.

In a further aspect, there are provided separate programs for implementing the blockchain network systems or the traceability management methods corresponding to each of the aspects described above using a computer. These programs may also be at least partially or wholly integrated into one integrated program system. Each program can be implemented by a computer in each terminal or each node. Instructions and data required to implement the program(s) can be stored in a predetermined storage medium. Details of each program can be achieved using known computer technology, and the description thereof is omitted herein. It is deemed implementable by a skilled person on the basis of the description herein and it is considered to be described in a manner that enables a skilled person to implement it. Further, the program(s) can be stored in a computer-readable storage medium. The storage medium may be a non-transient one such as a semiconductor memory, a hard disk, a magnetic recording medium, an optical recording medium, and the like. Further, the present invention can also be realized as a computer program product. The program is supplied to a computer apparatus using an input device or from the outside via a communication interface, stored in a storage device, and operates a processor according to predetermined steps or processes. The program is capable of displaying the processing results thereof including an intermediate state, as necessary, via a display device step by step or is able to communicate with the outside via a communication interface. For instance, the computer apparatus for this purpose comprises a processor, a storage device, an input device, a communication interface, and a display device, if necessary, that can typically be connected to each other by a bus.

### ADVANTAGEOUS EFFECTS OF INVENTION

According to the first to the nineth aspects, it is possible to contribute to verifying inherent state(s) of data objectively, neutrally, fairly, impartially, and easily when tracing collected information.

### BRIEF DESCRIPTION OF DRAWINGS

[Fig. 1]

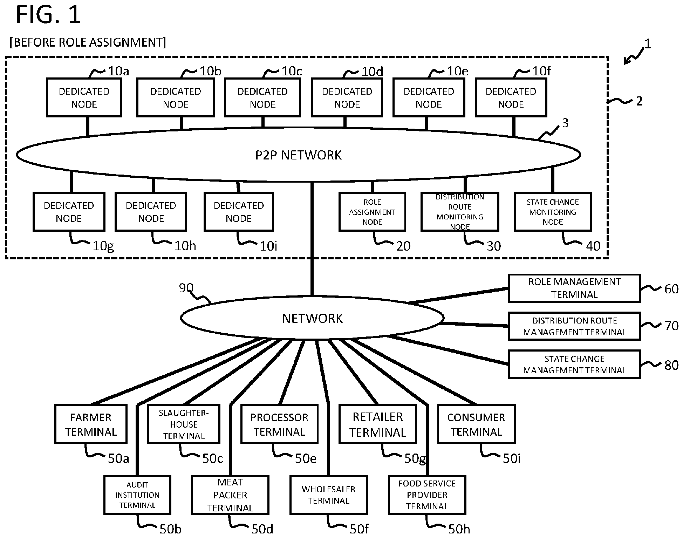

   Fig. 1 is a block diagram schematically illustrating a configuration of an example of a traceability management system relating to Example Embodiment 1 prior to role assignment.
[Fig. 2]

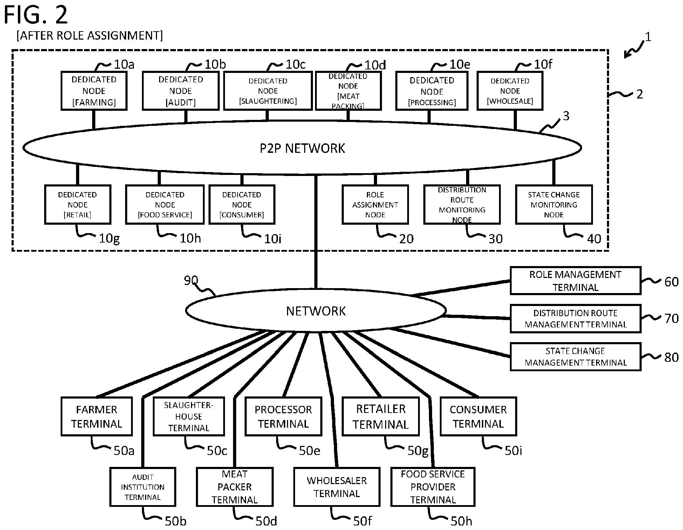

   Fig. 2 is a block diagram schematically illustrating a configuration of an example of the traceability management system relating to Example Embodiment 1 after role assignment.
[Fig. 3]

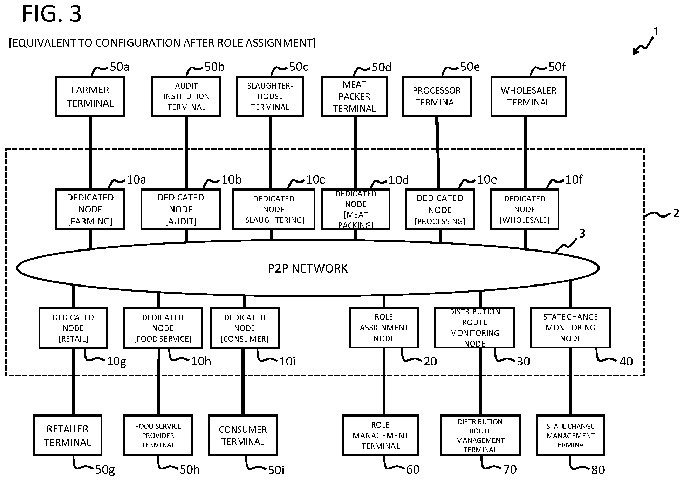

   Fig. 3 is a block diagram schematically illustrating a configuration, equivalent to that of Fig. 2, of an example of the traceability management system relating to Example Embodiment 1 after role assignment.
[Fig. 4]

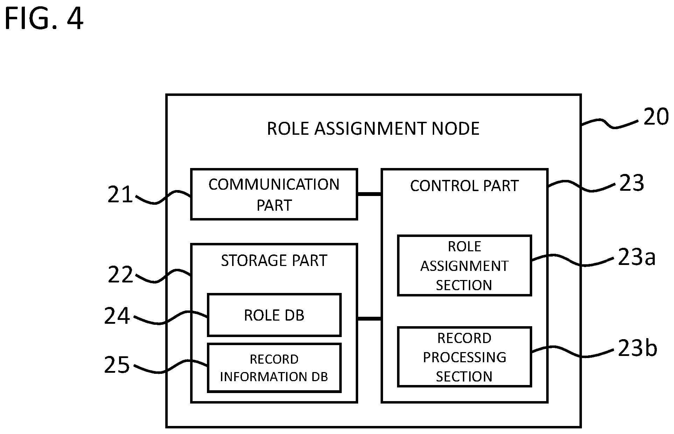

   Fig. 4 is a block diagram schematically illustrating a configuration of a role assignment node in an example of the traceability management system relating to Example Embodiment 1.
[Fig. 5]

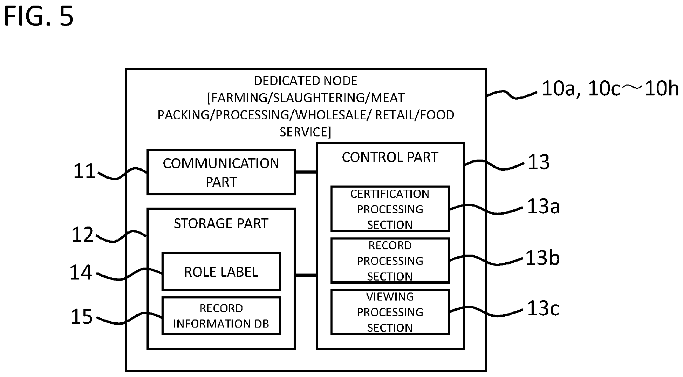

   Fig. 5 is a block diagram schematically illustrating a configuration of a dedicated node responsible for, as a role assigned thereto, a farming industry, slaughtering industry, meat packing industry, processing industry, wholesale industry, retail industry, or food service industry in a configuration of an example of the traceability management system relating to Example Embodiment 1 after role assignment.
[Fig. 6]

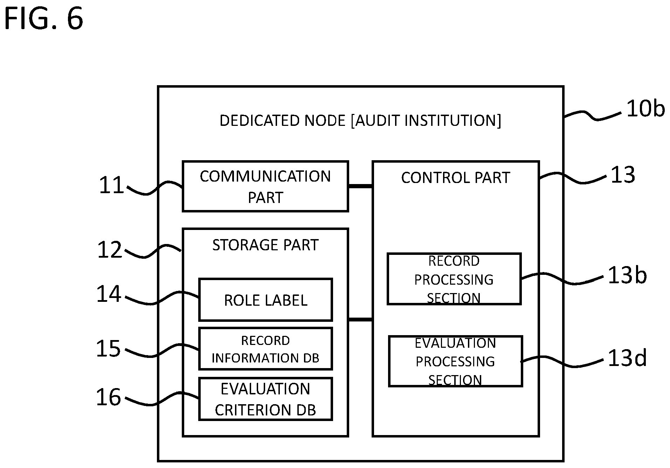

   Fig. 6 is a block diagram schematically illustrating a configuration of a dedicated node responsible for, as a role assigned thereto, an audit institution(s) in a configuration of an example of the traceability management system relating to Example Embodiment 1 after role assignment.
[Fig. 7]

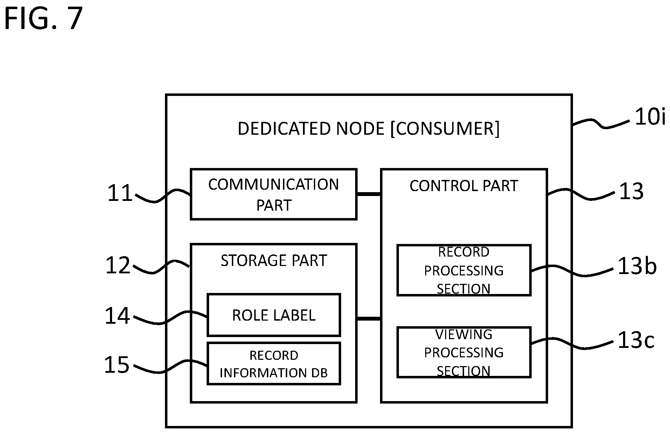

   Fig. 7 is a block diagram schematically illustrating a configuration of a dedicated node responsible for, as a role assigned thereto, a consumer(s) in a configuration of an example of the traceability management system relating to Example Embodiment 1 after role assignment.
[Fig. 8]

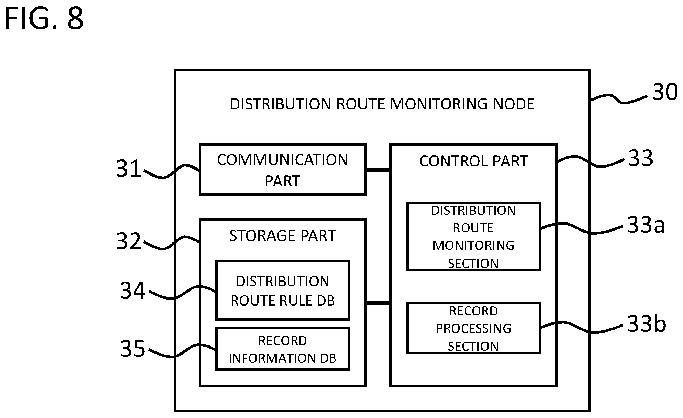

   Fig. 8 is a block diagram schematically illustrating a configuration of a distribution route monitoring node in an example of the traceability management system relating to Example Embodiment 1.
[Fig. 9]

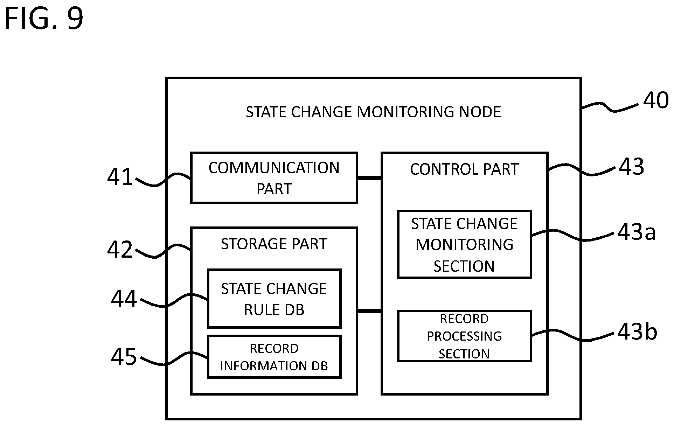

   Fig. 9 is a block diagram schematically illustrating a configuration of a state change monitoring node in an example of the traceability management system relating to Example Embodiment 1.
[Fig. 10]

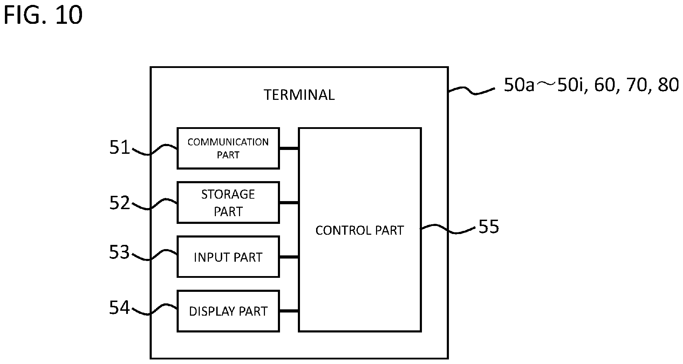

   Fig. 10 is a block diagram schematically illustrating a configuration of a terminal in an example of the traceability management system relating to Example Embodiment 1.
[Fig. 11]

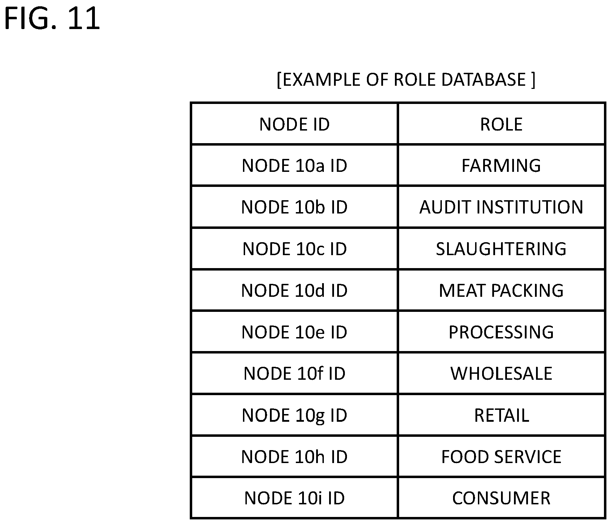

   Fig. 11 is a schematic diagram showing an example of a role database in an example of the traceability management system relating to Example Embodiment 1.
[Fig. 12]

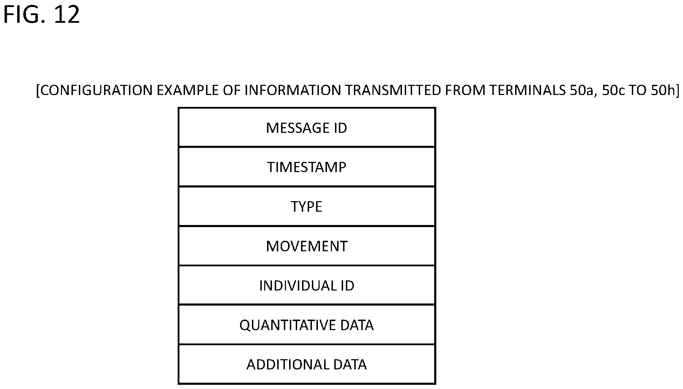

   Fig. 12 is a schematic diagram showing a configuration example of information transmitted from predetermined terminal(s) in an example of the traceability management system relating to Example Embodiment 1.
[Fig. 13]

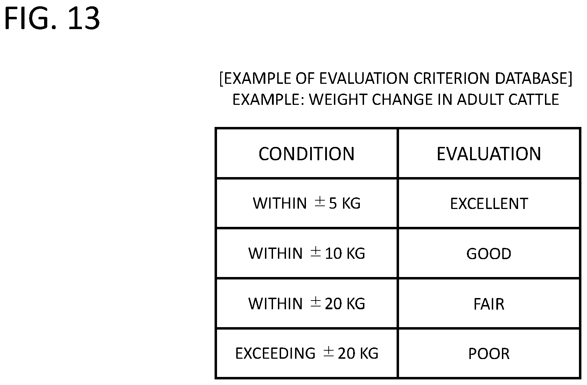

   Fig. 13 is a schematic diagram showing an example of an evaluation criterion database in an example of the traceability management system relating to Example Embodiment 1.
[Fig. 14]

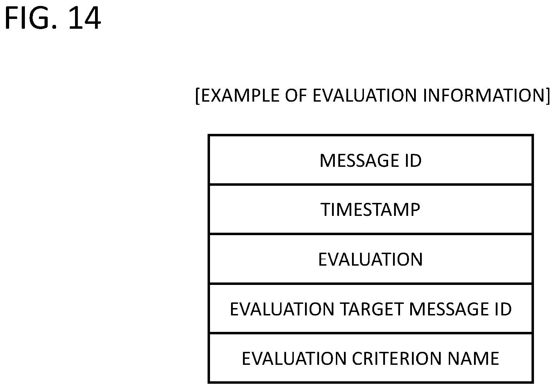

   Fig. 14 is a schematic diagram showing an example of evaluation information in an example of the traceability management system relating to Example Embodiment 1.
[Fig. 15]

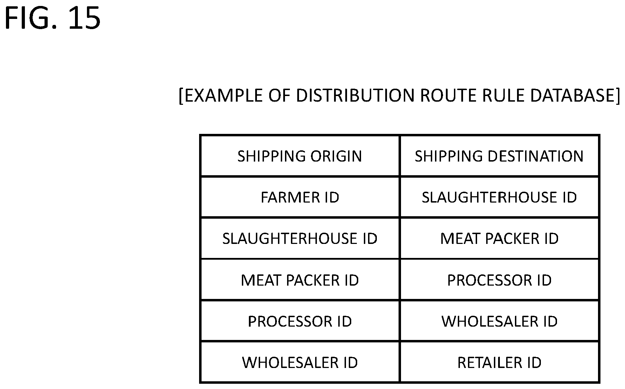

   Fig. 15 is a schematic diagram showing an example of a distribution route rule database in an example of the traceability management system relating to Example Embodiment 1.
[Fig. 16]

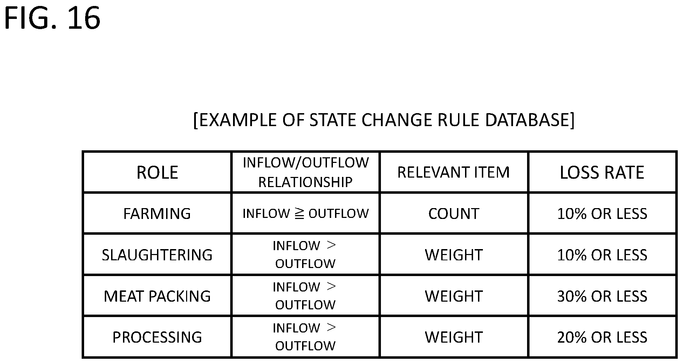

   Fig. 16 is a schematic diagram showing an example of a state change rule database in an example of the traceability management system relating to Example Embodiment 1.
[Fig. 17]

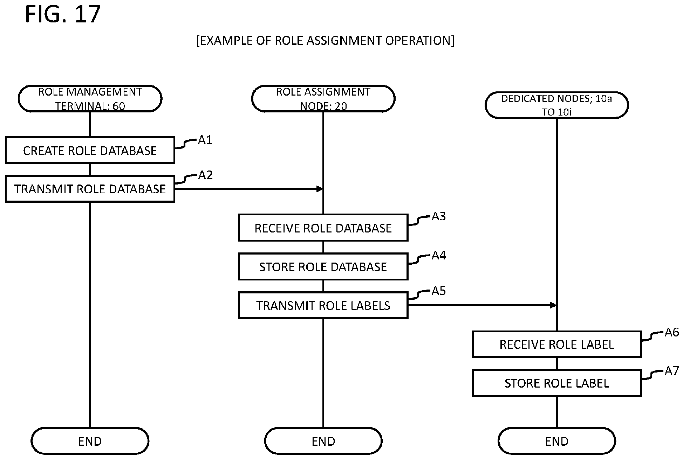

   Fig. 17 is a sequence chart schematically illustrating a role assigning operation of an example of the traceability management system relating to Example Embodiment 1.
[Fig. 18]

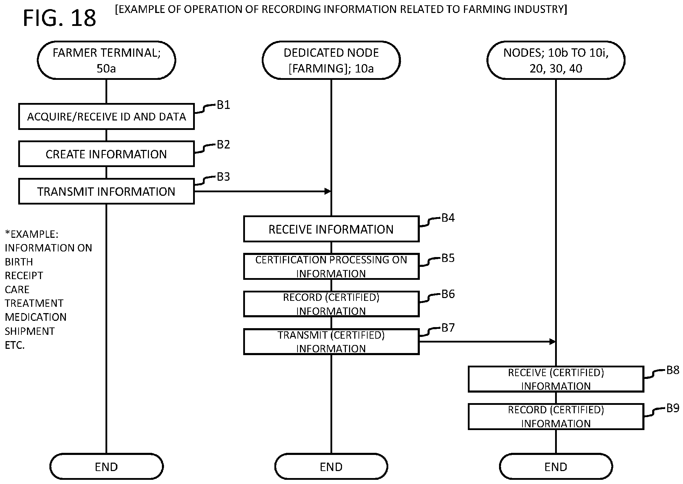

   Fig. 18 is a sequence chart schematically illustrating an example of an operation of recording information related to farming industry in an example of the traceability management system relating to Example Embodiment 1.
[Fig. 19]

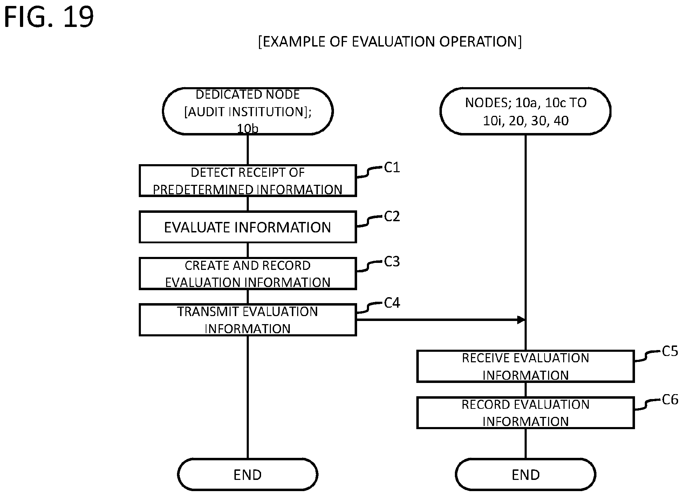

   Fig. 19 is a sequence chart schematically illustrating an evaluation operation of the traceability management system relating to Example Embodiment 1.
[Fig. 20]

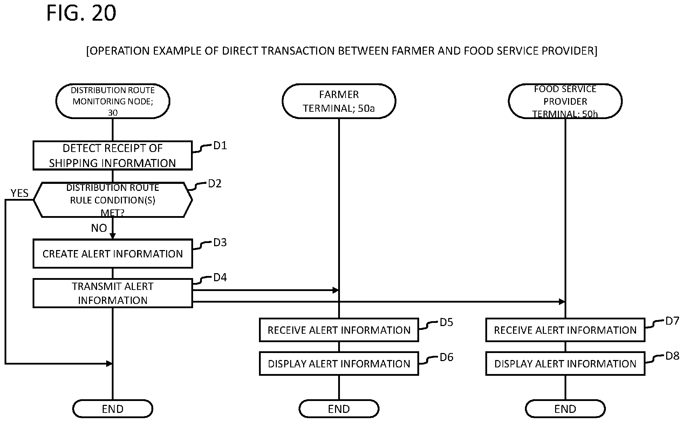

   Fig. 20 is a sequence chart schematically illustrating an example of an operation when a direct transaction occurs between a farmer and a food service provider in an example of the traceability management system relating to Example Embodiment 1.
[Fig. 21]

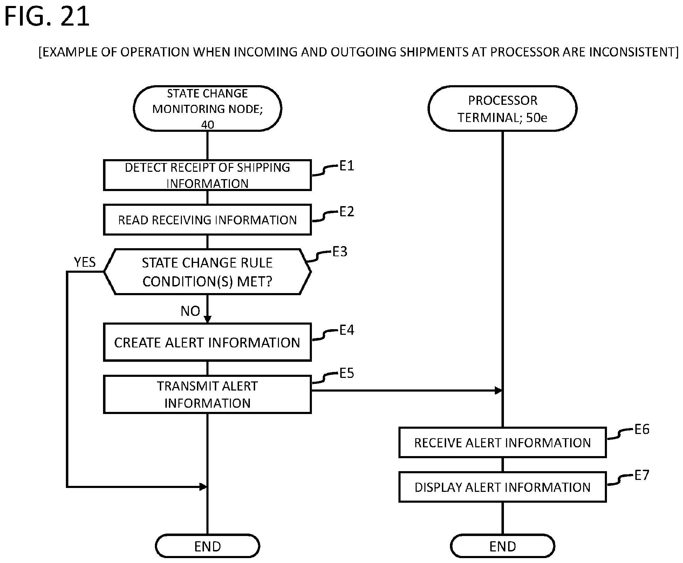

   Fig. 21 is a sequence chart schematically illustrating an example of an operation when incoming and outgoing shipments at a processor are inconsistent in an example of the traceability management system relating to Example Embodiment 1.
[Fig. 22]

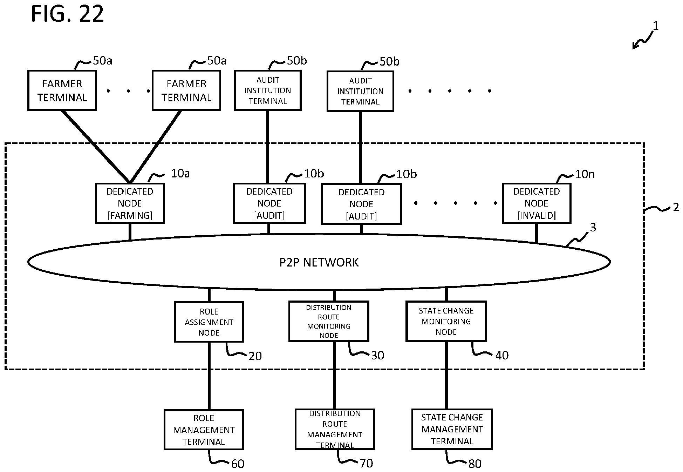

   Fig. 22 is a block diagram schematically illustrating a configuration of a modification example of the traceability management system relating to Example Embodiment 1 after role assignment.
[Fig. 23]

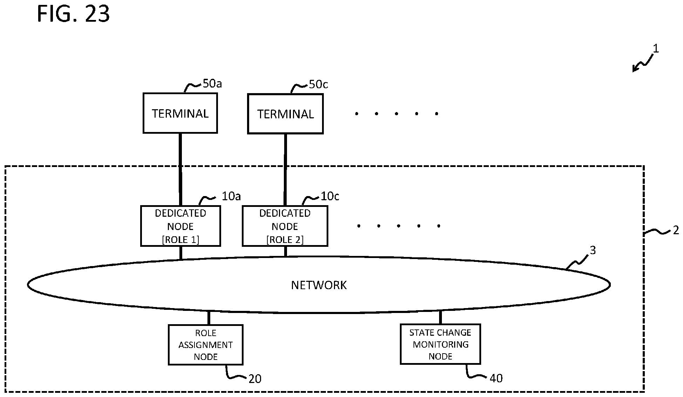

   Fig. 23 is a block diagram schematically illustrating a configuration of a traceability management system relating to Example Embodiment 2 after role assignment.
[Fig. 24]

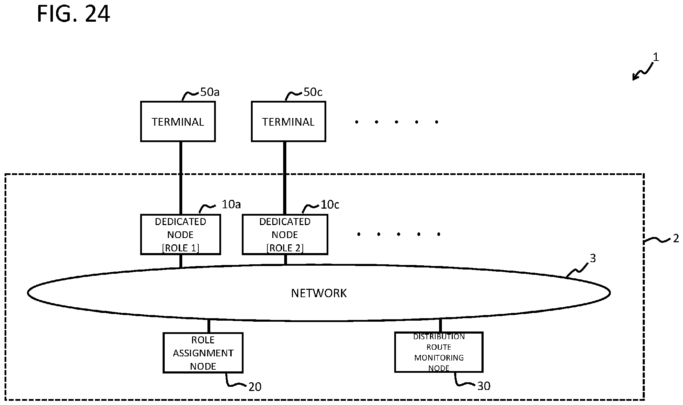

   Fig. 24 is a block diagram schematically illustrating a configuration of a traceability management system relating to Example Embodiment 3 after role assignment.
[Fig. 25]

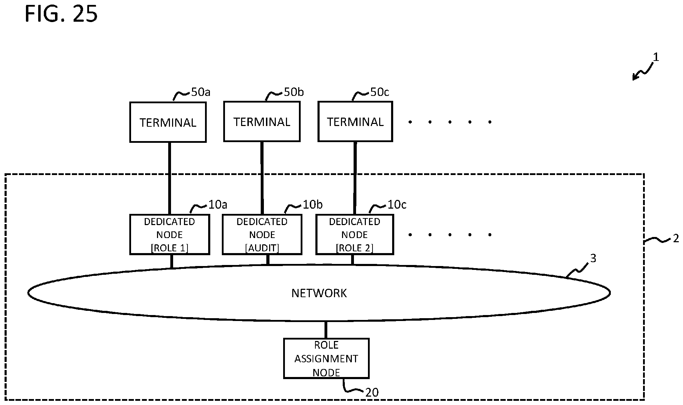

   Fig. 25 is a block diagram schematically illustrating a configuration of a traceability management system relating to Example Embodiment 4 after role assignment.
[Fig. 26]

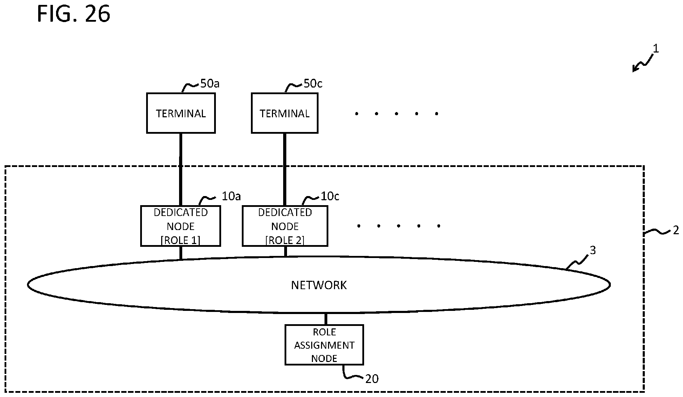

   Fig. 26 is a block diagram schematically illustrating a configuration of a traceability management system relating to Example Embodiment 5 after role assignment.
[Fig. 27]

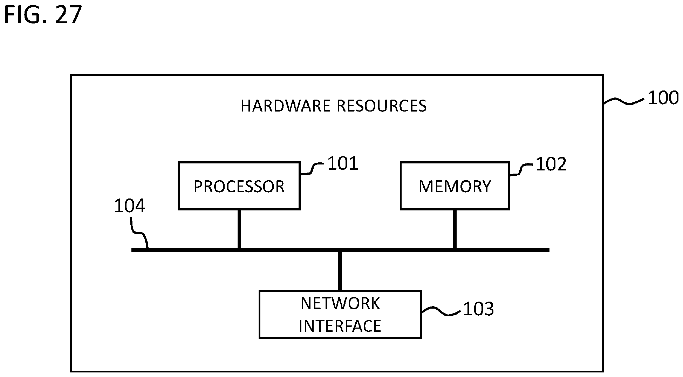

   Fig. 27 is a block diagram schematically illustrating a configuration of hardware resources.

### EXAMPLE EMBODIMENTS

Example embodiments will be described with reference to the drawings. It should be noted that the drawing reference signs herein are given mainly to facilitate understanding and are not intended to limit the present invention to the illustrated modes. Further, the following example embodiments are merely examples and do not limit the present invention. Connection lines between blocks in the drawings referred to in the following description can be both bidirectional and unidirectional. A unidirectional arrow schematically shows a main flow of a signal (data) and does not exclude bidirectionality. Further, in a circuit diagram, block diagram, internal configuration diagram, and connection diagram shown in the disclosure of the present application, the input and output ends of each connection line have an input port and an output port, respectively, although not shown explicitly. The same applies to input/output interfaces. A program is executed by a computer apparatus, and the computer apparatus comprises, for instance, a processor, storage device, input device, communication interface, and a display device as necessary. The computer apparatus is configured to be able to perform wired or wireless communication with an internal device therein or with an external device (including a computer) via the communication interface.

### [Example Embodiment 1]

The following describes a traceability management system relating to Example Embodiment 1 with reference to the drawings. Fig. 1 is a block diagram schematically illustrating a configuration of an example of the traceability management system relating to Example Embodiment 1 prior to role assignment. Fig. 2 is a block diagram schematically illustrating a configuration of an example of the traceability management system relating to Example Embodiment 1 after role assignment. Fig. 3 is a block diagram schematically illustrating a configuration, equivalent to that of Fig. 2, of an example of the traceability management system relating to Example Embodiment 1 after role assignment.

The traceability management system 1 is a system that allows for collecting, managing, and tracing various information related to the production, processing, or distribution of target items (refer to Fig. 1). Here, a target item may be something that undergoes a change during the processes of production, processing, or distribution. For instance, it may be something that changes as components are assembled, such as machinery, or something that is broken down and transformed into smaller pieces, such as livestock meat during butchering or processing. Note that, in Example Embodiment 1, livestock meat is used as an example of the target item. The traceability management system 1 is configured to use a blockchain network system 2 to have each of a plurality of dedicated nodes 10a to 10i, a role assignment node 20, a distribution route monitoring node 30, and a state change monitoring node 40 hold (in a distributed manner) information identical to collected various information related to the target item(s). The traceability management system 1 is configured to use a smart contract(s) to automatically monitor for a data deficiency (deficiencies) or error(s) in various information collected from predetermined dedicated nodes 10a and 10c to 10h. The traceability management system 1 is configured to use a smart contract(s) to automatically monitor (verify) inherent state(s) of data (evaluation, fraudulence, falsification, etc.) in the various information collected from the predetermined dedicated nodes 10a and 10c to 10h.

Here, for instance, the traceability management system 1 may be used to manage traceability of production history (such as farming, cultivation, or harvesting processes), processing history, and distribution history of various products including animal husbandry products related to livestock meat (for instance, beef, pork, chicken, etc.), agricultural products (for instance, cotton, coffee, cacao, etc.), seafood, aquaculture products, raw materials, mining products, gemstones, and industrial goods. Further, the traceability management system 1 can be employed to verify compliance with industry standards, laws, regulations, ethics, and de facto standards, ensure fair trade practices, and detect any substitution or falsification. In addition, the traceability management system 1 can be used to evaluate data on the basis of evaluation criteria such as Global Good Agricultural Practice (GGAP), Japanese Good Agricultural Practice (JGAP), and Hazard Analysis and Critical Control Points (HACCP). The traceability management system 1 can also be utilized to assess factors likely to appeal to consumers (for instance, pesticide-free farming, organic cultivation, place of origin, adherence to animal welfare, etc.) and to verify elements that might provoke consumer aversion (such as illegal poaching, theft, smuggling, conflict minerals, child labor, forced labor, violation of animal welfare, etc.).

The traceability management system 1 comprises functionality to have the role assignment node 20 assign role labels to the dedicated nodes 10a to 10i and configure corresponding terminals 50a to 50i (refer to Figs. 1 and 2). In addition to changing a state in which role labels are not assigned to the dedicated nodes 10a to 10i (refer to Fig. 1) to one in which role labels are assigned to the dedicated nodes 10a to 10i (refer to Fig. 2), the traceability management system 1 may change role labels assigned to the dedicated nodes 10a to 10i. The configuration of the traceability management system 1 in Fig. 2 is equivalent to a configuration, such as that of Fig. 3, in which the dedicated nodes 10a to 10i with role labels assigned thereto, the role assignment node 20, the distribution route monitoring node 30, and the state change monitoring node 40 are connected to the terminals 50a to 50i with corresponding roles, a role management terminal 60, a distribution route management terminal 70, and a state change management terminal 80, respectively. In the traceability management system 1, in a state in which role labels are assigned, the dedicated nodes 10a to 10i are able to communicate with the corresponding terminals 50a to 50i via a network 90. In the traceability management system 1, the role assignment node 20, the distribution route monitoring node 30, and the state change monitoring node 40 are able to communicate with the respective corresponding terminals via the network 90, namely, the role management terminal 60, the distribution route management terminal 70, and the state change management terminal 80. Note that the role assignment node 20, the distribution route monitoring node 30, and the state change monitoring node 40 are nodes preconfigured with the roles of role assignment, distribution route monitoring, and state change monitoring, respectively.

The blockchain network system 2 is a network system that uses a blockchain and is configured to have the nodes 10a to 10i, 20, 30, and 40 connected to each other in a P2P network 3 and have the same information related to the target item(s) distributed and held (redundantly held) in all or any of the nodes 10a to 10i, 20, 30, and 40 (refer to Figs. 1 to 3). The blockchain network system 2 comprises the dedicated nodes 10a to 10i, the role assignment node 20, the distribution route monitoring node 30, the state change monitoring node 40, and the P2P (Peer-to-Peer) network 3.

Each of the nodes 10a to 10i, 20, 30, and 40 (computers; they may also be servers) performs predetermined operation and stores predetermined information (refer to Figs. 1 to 3). Each of the nodes 10a to 10i, 20, 30, and 40 (or any one of them) stores collected information. The nodes 10a to 10i, 20, 30, and 40 may be physical machines or virtual machines. Each of the nodes 10a to 10i, 20, 30, and 40 has unique identification information. The nodes 10a to 10i, 20, 30, and 40 will be described in detail later.

The P2P network 3 is a network in which the nodes 10a to 10i, 20, 30, and 40 are interconnected in an equal, peer-to-peer relationship (refer to Figs. 1 to 3). The P2P network 3 may be a public network, a private network, or a virtual network or may be any suitable combination thereof.

Next, the following describes the nodes and the terminals in the traceability management system relating to Example Embodiment 1 with reference to the drawings. Fig. 4 is a block diagram schematically illustrating a configuration of the role assignment node in an example of the traceability management system relating to Example Embodiment 1. Fig. 5 is a block diagram schematically illustrating a configuration of a dedicated node responsible for, as a role assigned thereto, a farming, slaughtering, meat packing, processing, wholesale, retail, or food service industry in a configuration of an example of the traceability management system relating to Example Embodiment 1 after role assignment. Fig. 6 is a block diagram schematically illustrating a configuration of a dedicated node responsible for, as a role assigned thereto, an audit institution(s) in a configuration of an example of the traceability management system relating to Example Embodiment 1 after role assignment. Fig. 7 is a block diagram schematically illustrating a configuration of a dedicated node responsible for, as a role assigned thereto, a consumer(s) in a configuration of an example of the traceability management system relating to Example Embodiment 1 after role assignment. Fig. 8 is a block diagram schematically illustrating a configuration of the distribution route monitoring node in an example of the traceability management system relating to Example Embodiment 1. Fig. 9 is a block diagram schematically illustrating a configuration of the state change monitoring node in an example of the traceability management system relating to Example Embodiment 1. Fig. 10 is a block diagram schematically illustrating a configuration of a terminal in an example of the traceability management system relating to Example Embodiment 1. Fig. 11 is a schematic diagram showing an example of a role database in an example of the traceability management system relating to Example Embodiment 1. Fig. 12 is a schematic diagram showing a configuration example of information transmitted from predetermined terminal(s) in an example of the traceability management system relating to Example Embodiment 1. Fig. 13 is a schematic diagram showing an example of an evaluation criterion database in an example of the traceability management system relating to Example Embodiment 1. Fig. 14 is a schematic diagram showing an example of evaluation information in an example of the traceability management system relating to Example Embodiment 1. Fig. 15 is a schematic diagram showing an example of a distribution route rule database in an example of the traceability management system relating to Example Embodiment 1. Fig. 16 is a schematic diagram showing an example of a state change rule database in an example of the traceability management system relating to Example Embodiment 1.

With reference to Fig. 4, the role assignment node 20 is a node that assigns roles (role labels 14 in Figs. 5 to 7) to the dedicated nodes (10a to 10i in Figs. 1 to 3) in the blockchain network system (2 in Figs. 1 to 3). By assigning a role, the role assignment node 20 connects each of the dedicated nodes 10a to 10i to at least one of the corresponding terminals 50a to 50i. Note that, although the role assignment node 20 exclusively connects a single terminal to a corresponding dedicated node in Fig. 3, it may also diversely connect a single terminal to a plurality of corresponding dedicated nodes. This is because, for instance, a single corporation, such as a major food manufacturer, may be involved in farming, slaughtering, meat packing, and processing industries, and when one terminal is used as a farming industry terminal, a slaughtering industry terminal, a meat packing industry terminal, and a processing industry terminal due to the hardware configuration, the terminal may be connected to a plurality of corresponding dedicated nodes. The role labels are labels for indicating the roles of the dedicated nodes 10a to 10i. The role labels may use character strings, numbers, codes, etc., that represent roles. The role labels enable the node (10b in Fig. 6; responsible for an audit institution(s)) to evaluate the target item(s) corresponding to the roles (other than for an audit institution(s)), the distribution route monitoring node (30 in Fig. 8) to monitor a distribution route(s) of the target item(s), and the state change monitoring node (40 in Fig. 9) to monitor change(s) in the state of the target item(s) corresponding to its role. The role assignment node 20 comprises a communication part 21, a storage part 22, and a control part 23.

The communication part 21 is a functional part that communicates with the dedicated nodes 10a to 10i, the distribution route monitoring node (30 in Figs. 1 to 3, and 8) and the state change monitoring node (40 in Figs. 1 to 3, and 9) via the P2P network 3 (refer to Fig. 4). The communication part 21 is able to communicate with the role management terminal (60 in Figs. 2 and 3) via the network (90 in Fig. 2).

The storage part 22 is a functional part that stores various information and a program(s) (refer to Fig. 4). The storage part 22 stores a role database (role DB) 24 and a record information database (record information DB) 25. The role database 24 is a database in which the identification information (IDs) of the dedicated nodes 10a to 10i are associated with roles (role labels) (refer to Fig. 11). Note that the role database 24 may be stored not only in the role assignment node 20, but also in the other nodes 10a to 10i, 30, and 40 or another blockchain network system (not shown in the drawings) to further enhance security and fairness. The role database 24 may also be stored in the blockchain network system 2 as a blockchain separate from record information databases 15, 25, 35, and 45 (traceability information). The record information database 25 is a database in which various pieces of information from the dedicated nodes 10a to 10h, the distribution route monitoring node 30, and the state change monitoring node 40 are recorded in association with each other. The record information database 25 shares the content thereof with the other record information databases (15 in Figs. 5 to 7, 35 in Fig. 8, and 45 in Fig. 9).

The control part 23 is a functional part that controls the communication part 21 and the storage part 22 (refer to Fig. 4). The control part 23 implements a role assignment section 23a and a record processing section 23b by performing predetermined processing and executing a program(s). The role assignment section 23a is a processing section that assigns a role label to each of the dedicated nodes 10a to 10i on the basis of the role database 24 and executes a contract(s). Depending on the type of a role label assigned, the role assignment section 23a configures any of a certification processing section (13a in Fig. 5), a record processing section (13b in Figs. 5 to 7), a viewing processing section (13c in Figs. 5 and 7), and an evaluation processing section (13d in Fig. 6) in a control part (13 in Figs. 5 to 7) of each of the dedicated nodes 10a to 10i. When assigning a role label of farming, slaughtering, meat packing, processing, wholesale, retail, or food service industry to the dedicated nodes 10a and 10c to 10h, the role assignment section 23a configures the certification processing section 13a, the record processing section 13b, and the viewing processing section 13c in the control part 13 of each of the dedicated nodes 10a and 10c to 10h (refer to Fig. 5). When assigning a role label of audit institution to the dedicated node 10b, the role assignment section 23a configures the record processing section 13b and the evaluation processing section 13d in the control part 13 of the dedicated node 10b (refer to Fig. 6). When assigning a role label of consumer to the dedicated node 10i, the role assignment section 23a configures the record processing section 13b and the viewing processing section 13c in the control part 13 of the dedicated node 10i (refer to Fig. 7). The record processing section 23b is a processing section that associates various pieces of information from the dedicated nodes 10a to 10h, the distribution route monitoring node 30, and the state change monitoring node 40 with each other and records them in the record information database 25.

With reference to Fig. 5, the dedicated nodes 10a and 10c to 10h are nodes responsible for predetermined roles (in this case, farming, slaughtering, meat packing, processing, wholesale, retail, and food service industries). The dedicated nodes 10a and 10c to 10h are assigned to roles (the role labels 14) by the role assignment node (20 in Figs. 1 to 3) and connected to the corresponding terminals 50a and 50c to 50h. The dedicated nodes 10a and 10c to 10h operate and store information according to their assigned roles. Each of the dedicated nodes 10a and 10c to 10h comprises a communication part 11, a storage part 12, and the control part 13.

The communication part 11 is a functional part that communicates with the nodes other than its own (any of the nodes 10a to 10i), the role assignment node (20 in Figs. 1 to 4), the distribution route monitoring node (30 in Figs. 1 to 3 and 8), and the state change monitoring node (40 in Figs. 1 to 3 and 9) via the P2P network 3 (refer to Fig. 5). Via the network (90 in Fig. 2), the communication part 11 is able to communicate with the terminal (any of the terminals 50a and 50c to 50h in Figs. 2 and 3) corresponding to the role label assigned to its own node (any of the nodes 10a and 10c to 10h).

The storage part 12 is a functional part that stores various information and a program(s) (refer to Fig. 5). The storage part 12 stores the role label 14 and the record information database (record information DB) 15. The role label 14 is assigned by the role assignment node 20 on the basis of the role database (24 in Fig. 4) and relates to farming, slaughtering, meat packing, processing, wholesale, retail, or food service industry in this case. The record information database 15 is a database in which various pieces of information from the dedicated nodes 10a to 10h, the distribution route monitoring node 30, and the state change monitoring node 40 are recorded in association with each other. The record information database 15 shares the content thereof with the other record information databases (25 in Fig. 4, 15 in Fig. 6, 15 in Fig. 7, 35 in Fig. 8, and 45 in Fig. 9).

The control part 13 is a functional part that controls the communication part 11 and the storage part 12 (refer to Fig. 5). The control part 13 performs predetermined processing. The role assignment node 20 configures the certification processing section 13a, the record processing section 13b, and the viewing processing section 13c in the control part 13 according to the role of the assigned role label 14 (farming, slaughtering, meat packing, processing, wholesale, retail, or food service industry in this case). The certification processing section 13a is a processing section that verifies that there is no data deficiency or error in information acquired from the terminal (any of the terminals 50a and 50c to 50h in Figs. 2 and 3) corresponding to the role label assigned to its own node (any of the nodes 10a and 10c to 10h) to certify the result when there is no deficiency or error and is a processing section that executes a contract(s). The certification processing section 13a records the certified information in association with corresponding information in the record information database 15 of its own node (any of the nodes 10a and 10c to 10h). The certification processing section 13a transmits the certified information to the nodes (any of the nodes 10a to 10i) other than its own, the role assignment node 20, the distribution route monitoring node 30, and the state change monitoring node 40. Note that the certification processing section 13a may limit the transmission destinations of the certified information. When there is any data deficiency or error in the acquired information, the certification processing section 13a notifies the terminal (any of the terminals 50a and 50c to 50h in Figs. 2 and 3) corresponding to the role label assigned to its own node (any of the nodes 10a and 10c to 10h) thereof and transmits alert information to alert the terminal. The record processing section 13b is a processing section that associates various pieces of information from the nodes other than its own (any of the nodes 10a to 10h), the distribution route monitoring node 30, and the state change monitoring node 40 with each other to record them in the record information database 15. The viewing processing section 13c is a processing section that receives a viewing request from the terminal (any of the terminals 50a and 50c to 50h in Figs. 2 and 3) corresponding to the role label assigned to its own node (any of the nodes 10a and 10c to 10h), reads corresponding information in response to the request, and transmits the information to the corresponding terminal. Note that the viewing processing section 13c may control (restrict, prohibit, etc.) the information that can be read in response to a viewing request.

Here, the information certified and transmitted by the certification processing section 13a of the dedicated nodes 10a and 10c to 10h can be information (metadata) in which, for instance, a message ID, timestamp, type, movement, individual ID, quantitative data, and additional data are associated with each other, as shown in Fig. 12. The message ID is a unique identifier for the information (message) and can be a number(s) or a letter(s). The timestamp indicates the date and time when the information is transmitted (or when the information is created). The type indicates the type of the information, and for instance, any one of birth, receipt, care, feeding, weight, treatment, medication, shipment, etc., is selected. The movement is data that specifies the source and destination of the target item(s) or information thereof and can be identification information of the source (terminal) and destination (terminal). The individual ID is unique identification information for the target item(s) (for instance, livestock) and can be a number(s) or a letter(s). The quantitative data indicates a quantity related to the target item(s) and can be, for instance, count, weight, volume, size, duration, frequency, etc. The additional data refers to supplementary data related to the above items, such as animal breed, transportation means, feed type, administered medication name, etc. If there is no supplementary data to add, it may be omitted.

With reference to Fig. 6, the dedicated node 10b is a node that operates and stores information according to the role of the role label 14 (audit institution in this case) assigned by the role assignment node (20 in Figs. 1 to 3). The dedicated node 10b comprises the communication part 11, the storage part 12, and the control part 13.

The communication part 11 is a functional part that communicates with the dedicated nodes 10a and 10c to 10i (the nodes other than its own dedicated node 10b), the role assignment node (20 in Figs. 1 to 4), the distribution route monitoring node (30 in Figs. 1 to 3 and 8), and the state change monitoring node (40 in Figs. 1 to 3 and 9) via the P2P network 3 (refer to Fig. 6). Via the network (90 in Fig. 2), the communication part 11 is able to communicate with the audit institution terminal (50b in Figs. 2 and 3) corresponding to the role label assigned to its own dedicated node 10b.

The storage part 12 is a functional part that stores various information and a program(s) (refer to Fig. 6). The storage part 12 stores the role label 14, the record information database (record information DB) 15, and an evaluation criterion database (evaluation criterion DB) 16. The role label 14 is assigned by the role assignment node 20 on the basis of the role database (24 in Fig. 4) and relates to audit institution in this case. The record information database 15 is a database in which various pieces of information from the dedicated nodes 10a to 10h, the distribution route monitoring node 30, and the state change monitoring node 40 are recorded in association with each other. The record information database 15 shares the content thereof with the other record information databases (25 in Fig. 4, 15 in Fig. 5, 15 in Fig. 7, 35 in Fig. 8, and 45 in Fig. 9). The evaluation criterion database 16 is a database in which condition(s) (for instance, multi-stage numerical ranges) for a predetermined evaluation target(s) (for instance, weight change in adult cattle) are associated with evaluations (for instance, excellent, good, fair, poor) (refer to Fig. 13). The evaluation criteria of the evaluation criterion database 16 are not limited to those shown in Fig. 13, and for instance, evaluation may be made on the basis of whether or not one condition is met, or each condition may be evaluated with a score, etc. Note that the evaluation criterion database 16 may be stored not only in the dedicated node 10b (role: audit institution), but also in the other nodes 10a, 10c to 10i, 20, 30, and 40 or another blockchain network system (not shown in the drawings) to further enhance security and fairness. The evaluation criterion database 16 may also be stored in the blockchain network system 2 as a blockchain separate from the record information databases 15, 25, 35, and 45 (traceability information).

The control part 13 is a functional part that controls the communication part 11 and the storage part 12 (refer to Fig. 6). The control part 13 performs predetermined processing. The role assignment node 20 configures the record processing section 13b and the evaluation processing section 13d in the control part 13 according to the role of the assigned role label 14 (audit institution in this case). The record processing section 13b is a processing section that associates various pieces of information from the dedicated nodes 10a and 10c to 10h (the nodes other than its own), the distribution route monitoring node 30, and the state change monitoring node 40 with each other to record them in the record information database 15. The evaluation processing section 13d is a processing section that evaluates predetermined information on the basis of the evaluation criterion database 16 when reception of the information is detected (or at regular intervals) and is a processing section that executes a contract(s). The evaluation processing section 13d creates evaluation information on the basis of the evaluation of the detected information. The evaluation processing section 13d records the created evaluation information in association with corresponding information in the record information database 15 in its own dedicated node 10b. The evaluation processing section 13d transmits the evaluation information to the dedicated nodes 10a and 10c to 10h (the nodes other than its own), the role assignment node 20, the distribution route monitoring node 30, and the state change monitoring node 40. Note that, although the evaluation processing section 13d automatically performs evaluation processing in the dedicated node 10b, it is also possible to transmit the received predetermined information to the audit institution terminal 50b, allowing a user(s) (audit institution staff member(s)) of the audit institution terminal 50b to perform the evaluation processing. When the evaluation processing section 13d receives an evaluation request (including information to be evaluated) from the farmer terminal 50a before the farmer terminal 50a transmits official information to the dedicated node 10a (role: farming industry), the evaluation processing section 13d may evaluate the information relating to the evaluation request on the basis of the evaluation criterion database 16 and returns the evaluation result(s) to the farmer terminal 50a.

Here, the evaluation information can be information (metadata) in which, for instance, a message ID, timestamp, evaluation, evaluation target message ID, and evaluation criterion name are associated with each other, as shown in Fig. 14. The message ID is a unique identifier for the information (message) and can be a number(s), a letter(s), a hash value of the entirety or part(s) (for instance, the message ID and the timestamp) of the evaluation target message, or the like. The timestamp indicates the date and time when the information is transmitted (or when the information is created). The evaluation is the one given by the evaluation processing section 13d. The evaluation target message ID is a message ID of information serving as the basis for the evaluation. The evaluation criterion name refers to the name of the standard(s) serving as the basis for the evaluation (for instance, animal welfare assessment standards).

With reference to Fig. 7, the dedicated node 10i is a node that operates and stores information according to the role of the role label 14 (consumer in this case) assigned by the role assignment node (20 in Figs. 1 to 3). The dedicated node 10i comprises the communication part 11, the storage part 12, and the control part 13.

The communication part 11 is a functional part that communicates with the dedicated nodes 10a to 10h (the nodes other than its own dedicated node 10i), the role assignment node (20 in Figs. 1 to 4), the distribution route monitoring node (30 in Figs. 1 to 3 and 8), and the state change monitoring node (40 in Figs. 1 to 3 and 9) via the P2P network 3 (refer to Fig. 7). Via the network (90 in Fig. 2), the communication part 11 is able to communicate with the consumer terminal (50i in Figs. 2 and 3) corresponding to the role label assigned to its own dedicated node 10i.

The storage part 12 is a functional part that stores various information and a program(s) (refer to Fig. 7). The storage part 12 stores the role label 14 and the record information database (record information DB) 15. The role label 14 is assigned by the role assignment node 20 on the basis of the role database (24 in Fig. 4) and relates to consumer in this case. The record information database 15 is a database in which various pieces of information from the dedicated nodes 10a to 10h, the distribution route monitoring node 30, and the state change monitoring node 40 are recorded in association with each other. The record information database 15 shares the content thereof with the other record information databases (25 in Fig. 4, 15 in Fig. 5, 15 in Fig. 6, 35 in Fig. 8, and 45 in Fig. 9).

The control part 13 is a functional part that controls the communication part 11 and the storage part 12 (refer to Fig. 7). The control part 13 performs predetermined processing. The role assignment node 20 configures the record processing section 13b and the viewing processing section 13c in the control part 13 according to the role of the assigned role label 14 (consumer in this case). The record processing section 13b is a processing section that associates various pieces of information from the dedicated nodes 10a to 10h, the distribution route monitoring node 30, and the state change monitoring node 40 with each other to record them in the record information database 15. The viewing processing section 13c is a processing section that receives a viewing request from the consumer terminal (50i in Figs. 2 and 3) corresponding to the role label assigned to its own dedicated node 10i, reads corresponding information in response to the request, and transmits (returns) the information to the consumer terminal 50i.

With reference to Fig. 8, the distribution route monitoring node 30 is a node that monitors the distribution route(s) of the target item(s) on the basis of various information collected from the nodes (10a and 10c to 10h in Figs. 2 and 3). The distribution route monitoring node 30 comprises a communication part 31, a storage part 32, and a control part 33.

The communication part 31 is a functional part that communicates with the dedicated nodes 10a to 10i, the role assignment node (20 in Figs. 1 to 4), and the state change monitoring node (40 in Figs. 1 to 3 and 9) via the P2P network 3 (refer to Fig. 8). Via the network (90 in Fig. 2), the communication part 31 is able to communicate with the distribution route management terminal (70 in Figs. 2 and 3).

The storage part 32 is a functional part that stores various information and a program(s) (refer to Fig. 8). The storage part 32 stores a distribution route rule database (distribution route rule DB) 34 and the record information database (record information DB) 35. The distribution route rule database 34 is a database that defines distribution route rule(s) with respect to combination(s) of shipping origin(s) (source identification information) and shipping destination(s) (destination identification information) in the distribution route(s) (refer to Fig. 15). Note that the distribution route rule database 34 may be stored not only in the distribution route monitoring node 30, but also in the other nodes 10a to 10i, 20, and 40 or another blockchain network system (not shown in the drawings) to further enhance security and fairness. The distribution route rule database 34 may also be stored in the blockchain network system 2 as a blockchain separate from the record information databases 15, 25, 35, and 45 (traceability information). The record information database 35 is a database in which various pieces of information from the dedicated nodes 10a to 10h, the distribution route monitoring node 30, and the state change monitoring node 40 are recorded in association with each other. The record information database 35 shares the content thereof with the other record information databases (25 in Fig. 4, 15 in Figs. 5 to 7, and 45 in Fig. 9).

Here, the distribution route rule database 34 defines normal relationships between shipping origins and destinations in the distribution route, and any undefined combination of shipping origin and destination may be considered abnormal or prohibited. Even in a normal combination of shipping origin and destination, any discrepancy in the quantity in corresponding shipping and receiving information may be considered abnormal. Further, even in a normal combination of shipping origin and destination with matching and normal quantity data of shipping and receiving information, a traded quantity exceeding a predetermined amount may be considered abnormal (for instance, an abnormal transaction such as an unusually large volume of meat being directly traded between a meat packer and a consumer or a case that contravenes industry regulations). In addition, even in a normal combination of shipping origin and destination, any instance in which the time from shipment to receipt exceeds a predetermined duration may be considered an anomaly (for instance, when a gap between the shipment date and the receipt date is excessively large, indicating an abnormal transaction). Moreover, even in a normal combination of shipping origin and destination, a case where corresponding receiving information is not received within a predetermined period of time after shipping information is received may be treated as an anomaly. Note that, although the distribution route rule database 34 in Fig. 15 defines relationships between shipping origins and destinations in different industries, it may also define relationship(s) between shipping origin(s) and destination(s) in the same industry, such as in a case of farmers specializing in piglet rearing who receive piglets and ship out mature pigs.

The control part 33 is a functional part that controls the communication part 31 and the storage part 32 (refer to Fig. 8). The control part 33 implements a distribution route monitoring section 33a and a record processing section 33b by performing predetermined processing and executing a program(s). The distribution route monitoring section 33a is a processing section that monitors the distribution route(s) of the target item(s) on the basis of shipping information (information classified as shipment), receiving information (information classified as receipt), and the distribution route rule database 34 and is a processing section that executes a contract(s). When detecting shipping information (or receiving information) received from the terminals 50a and 50c to 50h via the corresponding dedicated nodes 10a and 10c to 10h (or at regular intervals), the distribution route monitoring section 33a verifies whether or not a combination of shipping origin and destination included in the shipping information (or the receiving information) satisfies any of the conditions (the distribution route rules) defined in the distribution route rule database 34. If not, the distribution route monitoring section 33a creates alert information and transmits it to each terminal (any of the terminals 50a and 50c to 50h) related to the shipping origin and destination. Note that the alert information may be transmitted to other terminals, in addition to the terminals related to the shipping origin and destination. Here, the alert information is information that alerts the shipping origin and destination to notify them that the distribution route is not normal. When the shipping origin and destination specified in the shipping information or/and the receiving information satisfy any of the conditions defined in the distribution route rule database 34, the distribution route monitoring section 33a may associate the shipping information or/and the receiving information with information indicating conformity to a distribution route rule(s) and record the data in each of the nodes 10a to 10i, 20, 30, and 40. The record processing section 33b is a processing section that associates various pieces of information from the dedicated nodes 10a to 10h, the distribution route monitoring node 30, and the state change monitoring node 40 with each other and records them in the record information database 25.

With reference to Fig. 9, the state change monitoring node 40 is a node that monitors change in the state of the target item(s) on the basis of various information collected from the nodes (10a and 10c to 10h in Figs. 2 and 3). The state change monitoring node 40 comprises a communication part 41, a storage part 42, and a control part 43.

The communication part 41 is a functional part that communicates with the dedicated nodes 10a to 10i, the role assignment node (20 in Figs. 1 to 4), and the distribution route monitoring node (30 in Figs. 1 to 3 and 8) via the P2P network 3 (refer to Fig. 8). Via the network (90 in Fig. 2), the communication part 41 is able to communicate with the state change management terminal (80 in Figs. 2 and 3).

The storage part 42 is a functional part that stores various information and a program(s) (refer to Fig. 9). The storage part 42 stores a state change rule database (state change rule DB) 44 and the record information database (record information DB) 45. The state change rule database 45 is a database that defines rule(s) regarding change in the state of the target item(s) between the time of receipt and the time of shipment (rule(s) regarding change in weight, count, etc.). For instance, as shown in Fig. 16, it can be a database in which normal relationships between inflow amounts at the time of receipt and outflow amounts at the time of shipment (for instance, inflow ≧ outflow) are associated with relevant items (for instance, count) and the loss rate (for instance, 10 percent or less) in predetermined roles (for instance, farming). Note that the state change rule database 44 may be stored not only in the state change monitoring node 40, but also in the other nodes 10a to 10i, 20, and 30 or another blockchain network system (not shown in the drawings) to further enhance security and fairness. The state change rule database 44 may also be stored in the blockchain network system 2 as a blockchain separate from the record information databases 15, 25, 35, and 45 (traceability information). The record information database 45 is a database in which various pieces of information from the dedicated nodes 10a to 10h, the distribution route monitoring node 30, and the state change monitoring node 40 are recorded in association with each other. The record information database 45 shares the content thereof with the other record information databases (25 in Fig. 4, 15 in Figs. 5 to 7, 35 in Fig. 8).

Here, for instance, when the assigned role is farming, since some of piglets purchased may fall ill or die during the growth process and the number of piglets that get shipped out may decrease, the state change rule database 44 can be configured so that the number of piglets received is equal to or greater than the number of piglets shipped out (refer to Fig. 16). Further, for instance, when the assigned role is meat packing, since dressed meat is produced by removing bones from the carcasses of slaughtered livestock, the state change rule database 44 can be configured so that the loss rate is high.

The control part 43 is a functional part that controls the communication part 41 and the storage part 42 (refer to Fig. 9). The control part 43 implements a state change monitoring section 43a and a record processing section 43b by performing predetermined processing and executing a program(s). The state change monitoring section 43a is a processing section that monitors change in the state of the target item(s) on the basis of shipping information (information classified as shipment), receiving information (information classified as receipt), and the state change rule database 44 and executes a contract(s). When detecting receipt of shipping information from any of the dedicated nodes 10a and 10c to 10h (or at regular intervals), the state change monitoring section 43a reads from the record information database 45 receiving information immediately before the shipping information from the same node and determines whether or not a state change(s) based on each piece of quantitative data in the shipping information and the receiving information (for instance, count, weight, etc.) satisfies/satisfy the condition(s) (state change rule(s)) defined in the state change rule database 44. If not, the state change monitoring section 43a creates alert information and transmits it to a terminal (any of the terminals 50a and 50c to 50h) related to a shipping origin in the shipping information. Note that the alert information may be transmitted to other terminals, in addition to the terminal related to the shipping origin. When each piece of quantitative data in the shipping information and the receiving information satisfies the state change rule database 44, the state change monitoring section 43a may associate the shipping information with certification information indicating conformity to a state change rule(s) and record the data in each of the nodes 10a to 10i, 20, 30, and 40. The record processing section 43b is a processing section that associates various pieces of information from the dedicated nodes 10a to 10h, the distribution route monitoring node 30, and the state change monitoring node 40 with each other and records them in the record information database 25.

With reference to Fig. 10, the terminals 50a to 50i, 60, 70 and 80 are terminals used by parties relevant to the target item(s). Each of the terminals 50a to 50i, 60, 70 and 80 has a unique terminal identifier. The terminal 50a is a farmer terminal used by a livestock worker(s) such as a livestock farmer (see Figs. 1 to 3). The terminal 50b is an audit institution terminal used by an audit institution(s) such as the Animal Welfare Institute. The terminal 50c is a slaughterhouse terminal used by a slaughterhouse worker(s). The terminal 50d is a meat packer terminal used by a meat packer(s). The terminal 50e is a processor terminal used by a processor(s). The terminal 50f is a wholesaler terminal used by a wholesaler(s). The terminal 50g is a retailer terminal used by a retailer(s). The terminal 50h is a food service provider terminal used by a food service provider(s). The terminal 50i is a consumer terminal used by a consumer(s). Note that consumers may include not only those who consume the target item(s), but also investors and banks that invest in or finance businesses related to the target item(s). Further, the terminals 50a to 50i in Figs. 1 to 3 are merely examples, and the names and number of terminals may be changed depending on the businesses, departments, number of processes, etc. involved in the distribution process. The terminal 60 is a role management terminal used by an administrator with specific authority regarding the role assignment node 20 in the blockchain network system 2. The terminal 70 is a distribution route management terminal used by an administrator with specific authority regarding the distribution route monitoring node 30 in the blockchain network system 2. The terminal 80 is a state change management terminal used by an administrator with specific authority regarding the state change monitoring node 40 in the blockchain network system 2.

Each of the terminals 50a to 50i, 60, 70, and 80 comprises a communication part 51, a storage part 52, an input part 53, a display part 54, and a control part 55 (refer to Fig. 10). The communication part 51 is a functional part that communicates with the blockchain network system 2 via the network (90 in Figs. 1 and 2). The storage part 52 is a functional part that stores various information and a program(s). The input part 53 is a functional part that receives information and can be, for instance, a keyboard, mouse, touch panel, camera, sensor, reader, microphone, and the like. The display part 54 is a functional part that displays (or outputs) information. The control part 55 is a functional part that controls the communication part 51, the storage part 52, the input part 53, and the display part 54 and performs predetermined information processing by executing a program(s).

The network 90 is a wired or wireless communication network that communicatively connects the blockchain network system 2 to the terminals 50a to 50i, 60, 70, and 80 (refer to Figs. 1 to 3). As the network 90, for instance, a communication network such as PAN (Personal Area Network), LAN (Local Area Network), MAN (Metropolitan Area Network), WAN (Wide Area Network), GAN (Global Area Network), and the like can be used.

The following describes an operation of the traceability management system relating to Example Embodiment 1.

First, a role assigning operation of the traceability management system relating to Example Embodiment 1 will be described with reference to a drawing. Fig. 17 is a sequence chart schematically illustrating a role assigning operation of an example of the traceability management system relating to Example Embodiment 1. Refer to Figs. 1 to 3 for the configuration of the traceability management system.

First, the role management terminal 60 creates a role database (corresponding to 24 in Fig. 4; refer to Fig. 11) in response to a user operation (step A1). Here, when creating the role database, the role management terminal 60 also creates processing section configuration program(s) for configuring processing section(s) performing predetermined processing (any of the certification processing section (13a in Fig. 5), the record processing section (13b in Figs. 5 to 7), the viewing processing section (13c in Figs. 5 and 7), and the evaluation processing section (13d in Fig. 6)) in the dedicated nodes 10a to 10i according to the roles of the role labels in the role database.

Next, the role management terminal 60 transmits the created role database to the role assignment node 20 (step A2). Here, when transmitting the role database, the role management terminal 60 also transmits the processing section configuration program(s).

Next, the role assignment node 20 receives the role database from the role management terminal 60 (step A3).

Next, the role assignment node 20 stores the received role database (24 in Fig. 4; refer to Fig. 11) (step A4). Here, when storing the role database, the role assignment node 20 also stores the processing section configuration program(s).

Next, the role assignment node 20 transmits a corresponding role label to each of the dedicated nodes 10a to 10i on the basis of the stored role database 24 (step A5). Here, when transmitting the role label, the role assignment node 20 also transmits the processing section configuration program(s) corresponding to the role label.

Next, each of the dedicated nodes 10a to 10i receives the role label corresponding thereto (step A6). Here, when receiving the role label, each of the dedicated nodes 10a to 10i also receives the processing section configuration program(s).

Finally, each of the dedicated nodes 10a to 10i stores the received role label (step A7) and terminates the operation thereafter. Here, when storing the role label, each of the dedicated nodes 10a to 10i executes the processing section configuration program(s) to configure processing section(s) therein according to the role of the role label.

Note that the role management terminal 60 is able to add or delete a node(s) or change the role(s) of a node(s) by changing the content of the role database 24 stored in the role assignment node 20 or updating it to a new role database 24, thereby being able to configure processing section(s) according to the role of each role label.

Next, the following describes an information registration operation of the traceability management system relating to Example Embodiment 1 with reference to a drawing. Fig. 18 is a sequence chart schematically illustrating an example of an operation of recording information related to farming industry in an example of the traceability management system relating to Example Embodiment 1. Refer to Figs. 1 to 3 for the configuration of the traceability management system. The following describes an example of an operation of recording information related to farming industry after role assignment.

First, the farmer terminal 50a acquires or receives identification information (ID) and data necessary to create information in response to a user operation (step B1).

Next, the farmer terminal 50a creates information (corresponding to the information in Fig. 12) in response to a user operation (step B2). Here, the information includes, for instance, information on birth, receipt, care, treatment, medication, shipment, etc., (information classified as birth, receipt, care, treatment, medication, and shipment).

Next, the farmer terminal 50a transmits the created information to the dedicated node 10a (role: farming) (step B3).

Next, the dedicated node 10a (role: farming) receives the information from the farmer terminal 50a (step B4).

Next, the dedicated node 10a (role: farming) verifies whether or not there is any data deficiency or error in the received information and performs certification processing if there is no deficiency or error (step B5). If there is any data deficiency or error in the received information, the dedicated node 10a (role: farming) notifies the farmer terminal 50a thereof, transmits alert information for drawing attention, and may terminate the operation thereafter.

Next, the dedicated node 10a (role: farming) records the (certified) information in association with corresponding information in its own record information database (15 in Fig. 5) (step B6).

Next, the dedicated node 10a (role: farming) transmits the (certified) information to the dedicated nodes 10b to 10i (the nodes other than the dedicated node 10a), the role assignment node 20, the distribution route monitoring node 30, and the state change monitoring node 40 (step B7).

Next, each of the dedicated nodes 10b to 10i, the role assignment node 20, the distribution route monitoring node 30, and the state change monitoring node 40 receives the (certified) information from the dedicated node 10a (role: farming) (step B8).

Finally, each of the dedicated nodes 10b to 10i, the role assignment node 20, the distribution route monitoring node 30, and the state change monitoring node 40 records the received (certified) information in association with corresponding information in the record information database (15 in Figs. 5 to 7, 25 in Fig. 4, 35 in Fig. 8, and 45 in Fig. 9) of its own node (10b to 10i, 20, 30, or 40) and terminates the operation thereafter (step B9).

Note that the steps B1 to B9 can be applied to an operation of recording information related to slaughtering, meat packing, processing, wholesale, retail, or food service industry after role assignment.

Next, an evaluation operation of the traceability management system relating to Example Embodiment 1 will be described with reference to a drawing. Fig. 19 is a sequence chart schematically illustrating an evaluation operation of the traceability management system relating to Example Embodiment 1. Refer to Figs. 1 to 3 for the configuration of the traceability management system.

First, the dedicated node 10b (role: audit institution) detects receipt of predetermined information (corresponding to the receipt in the step B8 in Fig. 18) (step C1). Here, the predetermined information is information (refer to Fig. 12) classified as evaluation target(s) (for instance, care, treatment, medication, etc.) of the evaluation criterion database (16 in Fig. 6). Further, the predetermined information may be information having the identification information of the audit institution terminal (50b in Figs. 1 to 3) or the dedicated node 10b (role: audit institution) as the movement destination of the information (refer to Fig. 12).

Next, the dedicated node 10b (role: audit institution) evaluates the detected information on the basis of the evaluation criterion database 16 (step C2).

Next, the dedicated node 10b (role: audit institution) creates evaluation information (refer to Fig. 14) on the basis of the evaluation of the detected information and records the created evaluation information in association with corresponding information in its own record information database (15 in Fig. 6) (step C3).

Next, the dedicated node 10b (role: audit institution) transmits the created evaluation information to the dedicated nodes 10a and 10c to 10i (the nodes other than the dedicated node 10b), the role assignment node 20, the distribution route monitoring node 30, and the state change monitoring node 40 (step C4).

Next, each of the nodes 10a, 10c to 10i, 20, 30, and 40 receives the evaluation information from the dedicated node 10b (role: audit institution) (step C5).

Finally, each of the nodes 10a, 10c to 10i, 20, 30, and 40 records the received evaluation information in association with corresponding information in its own respective record information database (15 in Fig. 5, 15 in Fig. 7, 25 in Fig. 4, 35 in Fig. 8, and 45 in Fig. 9) of the nodes 10a, 10c to 10i, 20, 30, and 40 (step C6) and terminates the operation thereafter.

Note that, although the steps C1 to C6 are described using an example of evaluating information related to a farming industry, these steps may be applied to evaluation of information related to other industries. For instance, information (e.g., processing information) related to a processing industry may be evaluated on the basis of an evaluation criterion/criteria for food processing.

Next, a distribution route monitoring operation of the traceability management system relating to Example Embodiment 1 will be described with reference to a drawing. Fig. 20 is a sequence chart schematically illustrating an example of an operation when a direct transaction occurs between a farmer and a food service provider in an example of the traceability management system relating to Example Embodiment 1. Refer to Figs. 1 to 3 for the configuration of the traceability management system. The following describes an example of an operation when a direct transaction occurs between a farmer and a food service provider.

First, the distribution route monitoring node 30 detects receipt of shipping information (corresponding to the receipt in the step B8 in Fig. 18) (step D1). Note that, although only receipt of shipping information is detected in this case, it is also possible to detect only receipt of the immediately following corresponding receiving information, or to detect receipt of both shipping information and receiving information.

Next, the distribution route monitoring node 30 determines whether or not a shipping origin (the farmer terminal 50a in this case) and a shipping destination (the food service provider terminal 50h in this case) in the detected shipping information satisfy any of the conditions defined in the distribution route rule database (34 in Fig. 8; refer to Fig. 15) (step D2). If any of the conditions is satisfied (YES in the step D2), the operation is terminated.

Further, when any of the conditions is satisfied (YES in the step D2), the detected shipping information may be recorded in association with certification information that certifies that the distribution route is normal. Note that, even if the shipping origin and destination satisfy any of the conditions defined in the distribution route rule database in the step D2, the operation may proceed to step D3 when the quantities in the corresponding shipping and receiving information do not match. In addition, even if the shipping origin and destination satisfy any of the conditions defined in the distribution route rule database and the quantities in the corresponding shipping and receiving information do match in the step D2, the operation may proceed to the step D3 when the traded quantity exceeds a predetermined amount (in a case of an abnormal trading volume). Moreover, even if the shipping origin and destination satisfy any of the conditions defined in the distribution route rule database in the step D2, the operation may proceed to the step D3 when the time from shipment to receipt exceeds a predetermined duration (in a case of an abnormal transaction time). Furthermore, even if the shipping origin and destination satisfy any of the conditions defined in the distribution route rule database in the step D2, the operation may proceed to the step D3 when corresponding receiving information cannot be received within a predetermined period of time after shipping information is received.

When the shipping origin and destination do not satisfy any of the conditions (NO in the step D2), the distribution route monitoring node 30 creates alert information that draws attention and notifies that the distribution route is not normal (the step D3). Note that, when creating the alert information, the distribution route monitoring node 30 may record the detected shipping information in association with the alert information.

Next, the distribution route monitoring node 30 transmits the created alert information to the shipping origin (the farmer terminal 50a) and the shipping destination (the food service provider terminal 50h) in the detected shipping information (step D4). Note that the alert information may be transmitted not only to each terminal related to the shipping origin and destination, but also to other terminals.

After the step D4, the farmer terminal 50a receives the alert information from the distribution route monitoring node 30 (step D5), displays the received alert information (step D6), and terminates the operation thereafter.

Further, after the step D4, concurrently with the steps D5 and D6, the food service provider terminal 50h receives the alert information from the distribution route monitoring node 30 (step D7), displays the received alert information (step D8), and terminates the operation thereafter.

Note that the steps D1 to D8 may be applied to a combination(s) other than that of a farmer and a food service provider.

Next, a state change monitoring operation of the traceability management system relating to Example Embodiment 1 will be described with reference to a drawing. Fig. 21 is a sequence chart schematically illustrating an example of an operation when incoming and outgoing shipments at a processor are inconsistent in an example of the traceability management system relating to Example Embodiment 1. Refer to Figs. 1 to 3 for the configuration of the traceability management system. The following describes an example of an operation when incoming and outgoing shipments at a processor are inconsistent.

First, the state change monitoring node 40 detects receipt of shipping information (corresponding to the receipt in the step B8 in Fig. 18) (step E1). Note that, although the state change monitoring node 40 detects receipt of shipping information in the step E1, it may instead detect receipt of receiving information, then detect receipt of the corresponding shipping information, and proceed to step E3, omitting step E2.

Next, the state change monitoring node 40 reads from the record information database (45 in Fig. 9) the receiving information immediately before the detected shipping information from the same node (10e (role: processing) in Figs. 2 and 3 in this case) (the step E2). If the receiving information cannot be read from the record information database (45 in Fig. 9), the state change monitoring node 40 may proceed to the step E3, determine that no condition defined in the state change rule database 44 is met, and proceed to step E4.

Next, the state change monitoring node 40 determines whether or not the quantities (weights in this case) in the detected shipping information and the read receiving information satisfy the conditions (processing, inflow/outflow relationship, and loss rate in this case) defined in the state change rule database 44 (the step E3). If so (YES in the step E3), the operation is terminated.

Note that, when the conditions are met (YES in the step E3), the state change monitoring node 40 may record the detected shipping information in association with certification information certifying that the state change(s) is/are normal.

If the conditions are not met (NO in the step E3), the state change monitoring node 40 creates alert information that draws attention and notifies that the state change(s) is/are not normal (the step E4). Note that, when the state change monitoring node 40 creates the alert information, it may record the detected shipping information in association with the alert information.

Next, the state change monitoring node 40 transmits the created alert information to the shipping origin (the processor terminal 50e) in the detected shipping information (step E5). Note that the alert information may be transmitted not only to the terminal related to the shipping origin, but also to other terminals.

Next, the processor terminal 50e receives the alert information from the state change monitoring node 40 (step E6), displays the received alert information (step E7), and terminates the operation thereafter.

Example Embodiment 1 is configured as described above. Meanwhile, the configuration of the traceability management system after role assignment can be modified as shown in Fig. 22. Specifically, a plurality of the terminals 50a (farmer terminals in Fig. 22) can be connected to a single dedicated node 10a assigned to a role (farming in Fig. 22). Further, for instance, when there is a plurality of audit institutions having different evaluation criteria from each other, the blockchain network system 2 can have a plurality of the dedicated nodes 10b assigned to the same role (audit institution in Fig. 22) and each dedicated node 10b can be connected to a terminal 50b (audit institution terminal in Fig. 22). In addition, in the blockchain network system 2, an extra and unnecessary dedicated node 10n may be disabled without being assigned a role. Further, when there is a shortage of nodes, the role assignment node 20 may add a new node and modify the content of the role database (refer to Fig. 11) or update it to a new role database to assign a role to each node. Moreover, for instance, when a single corporation, such as a major food manufacturer, is involved in a plurality of industries (for instance, farming, slaughtering, meat packing, and processing), there may be a dedicated node responsible for a role that consolidates multiple industries into one. Further, when one industry is divided into a plurality of departments, there may be a dedicated node responsible for each of the plurality of departments.

According to Example Embodiment 1, since the role assignment node 20 assigns roles to the dedicated nodes 10a to 10i and the dedicated node 10b (role: audit institution), the distribution route monitoring node 30, and the state change monitoring node 40 evaluate the target item(s) and monitor distribution route(s) and state change(s) in the blockchain network system 2, by viewing the result(s) thereof, it is possible to contribute to verifying inherent state(s) (evaluation, fraudulence, falsification, etc.) of data objectively, neutrally, fairly, impartially, and easily when tracing collected information. This allows stakeholders to instantly check for evaluation, fraudulence, falsification, etc., without conducting their own verification.

Further, according to Example Embodiment 1, since the role assignment node 20 assigns a role to each of the dedicated nodes 10a to 10i, it is possible to automatically monitor for a data deficiency (deficiencies) or error(s) in obtained information according to the role of each of the terminals 50a and 50c to 50h and to automatically monitor distribution route(s) and state change(s). Note that, in a typical blockchain network system that does not have a role assignment function, all nodes are equal and freely interact with each other, making it impossible to organize collected information and automatically monitor the distribution routes or state changes of target items.

Further, according to Example Embodiment 1, since the dedicated node 10b (role: audit institution) evaluates target item(s) and the result(s) thereof are made available for viewing, it is possible to provide added value that the target item(s) has/have been evaluated according to objective, neutral, fair, and impartial evaluation criteria.

Further, according to Example Embodiment 1, since the distribution route monitoring node 30 monitors the distribution route(s) of target item(s) and the result(s) thereof are made available for viewing, it is possible to ensure that the distribution route(s) of the target item(s) is/are consistent from start to finish, enhancing the reliability of the target item(s) and contributing to promoting high value-added products.

Further, according to Example Embodiment 1, since the state change monitoring node 40 monitors the distribution route(s) of target item(s) and the result(s) thereof are made available for viewing, it is possible to assure the authenticity of the target item(s).

Further, according to Example Embodiment 1, since collected information is managed using the blockchain network system 2, it is possible to ensure that the information remains unaltered from the time it is recorded, and even if any change is made, the modification history thereof is reliably preserved, allowing for post-event verification of any change.

Further, according to Example Embodiment 1, stakeholders can jointly operate the blockchain network system 2, and it is possible to prevent information from being changed (to the advantage of particular party/parties) at the discretion of the party/parties.

As background with respect to cattle, information related to cattle is currently managed by government agencies under national leadership due to BSE (Bovine Spongiform Encephalopathy). The information on cattle submitted by livestock producers and intermediate processors is managed by government agencies, which then issue certification (approval and assurance) for beef. While issues like BSE are not present for livestock other than cattle, the growing emphasis on animal welfare will necessitate demonstrating to consumers that the livestock products produced and distributed have been certified as having been raised in accordance with animal welfare standards. As the concept of animal welfare gains traction, differences in farming costs and prices between compliant and non-compliant practices may arise, leading to potential information falsification and a risk of eroding consumer trust. In order to show consumers that the information is free from fraud, it is necessary to ensure the integrity of the information through a traceability mechanism. For livestock other than cattle, however, there is no government-led mechanism to guarantee the integrity of information, and industry groups such as livestock farmers and intermediate processors must manage this on their own. If industry groups are to operate their own mechanisms, they will need to demonstrate to consumers the legitimacy of the information they oversee. To achieve this, it is essential that various industries with vested interests (livestock farming, processing, distribution, retail, etc.) are able to operate jointly or in collaboration. If, however, information assurance is conducted under the leadership of a specific industry, stakeholders will not feel comfortable joining in, and the system will not become widespread and its use will not be promoted. Therefore, with the conventional mechanism, powerful businesses can operate it arbitrarily, allowing certain parties to gain an unfair advantage. To ensure the quality, safety, and reliability of livestock products raised in accordance with animal welfare principles, a traceability management system for animal welfare products is needed. Further, since animal welfare livestock products have higher added value and are traded at higher prices than regular livestock products, a traceability management system therefor must be robust enough to withstand food fraud and information falsification. Non-cattle livestock animals such as pigs and chickens lack a government-led unified traceability system, and traceability management for them will be operated and utilized jointly and collaboratively by a plurality of stakeholders with vested interests, unlike the traceability system for cattle, which is managed by the government. Since a system that allows certain businesses to manipulate information according to their wishes or that gives some businesses advantages or disadvantages is problematic, a mechanism that ensures fairness is required. Example Embodiment 1 provides a traceability management system that meets these requirements.

### [Example Embodiment 2]

The following describes a traceability management system relating to Example Embodiment 2 with reference to a drawing. Fig. 23 is a block diagram schematically illustrating a configuration of the traceability management system relating to Example Embodiment 2 after role assignment.

A blockchain network system 2 is configured to have nodes 10a, 10c, ..., 20, and 40 connected to each other in a network 3 and have the nodes 10a, 10c, ..., 20, and 40 distributedly hold same information related to target item(s).

The nodes 10a, 10c, ..., 20, and 40 are comprised of a plurality of dedicated nodes 10a, 10c, ..., a role assignment node 20, and a state change monitoring node 40.

The dedicated nodes 10a, 10c, ... are responsible for predetermined roles. The role assignment node 20 is configured to store a role database that defines a role corresponding to each of the dedicated nodes 10a, 10c, ... and assign a role (for instance, role 1, role 2, ...) to each of the dedicated nodes 10a, 10c, ... on the basis of the role database to connect each of the dedicated nodes 10a, 10c, ... to at least one corresponding terminal (50a, 50b, ...) outside the blockchain network system 2. The state change monitoring node 40 is configured to store a state change rule database that defines rule(s) regarding change in the state of the target item(s) between the time of receipt and the time of shipment, receive the information from the terminals 50a, 50b, ... via the dedicated nodes 10a, 10c, ..., and monitor change in the state of the target item(s) by determining whether or not a state change(s) based on corresponding receiving and shipping information in the supplied information satisfies/satisfy the state change rule(s).

According to Example Embodiment 2, since the role assignment node 20 assigns roles to the dedicated nodes 10a, 10c, ... and the state change monitoring node 40 monitors change in the state of the target item(s) in the blockchain network system 2, by viewing the result(s) thereof, it is possible to contribute to verifying inherent state(s) (fraudulence, falsification, etc.) of data objectively, neutrally, fairly, impartially, and easily when tracing collected information.

### [Example Embodiment 3]

The following describes a traceability management system relating to Example Embodiment 3 with reference to a drawing. Fig. 24 is a block diagram schematically illustrating a configuration of the traceability management system relating to Example Embodiment 3 after role assignment.

A blockchain network system 2 is configured to have nodes 10a, 10c, ..., 20, and 30 connected to each other in a network 3 and have the nodes 10a, 10c, ..., 20, and 30 distributedly hold same information related to target item(s).

The nodes 10a, 10c, ..., 20, and 30 are comprised of a plurality of dedicated nodes 10a, 10c, ..., a role assignment node 20, and a distribution route monitoring node 30.

The dedicated nodes 10a, 10c, ... are responsible for predetermined roles. The role assignment node 20 is configured to store a role database that defines a role corresponding to each of the dedicated nodes 10a, 10c, ... and assign a role (for instance, role 1, role 2, ...) to each of the dedicated nodes 10a, 10c, ... on the basis of the role database to connect each of the dedicated nodes 10a, 10c, ... to at least one corresponding terminal (50a, 50b, ...) outside the blockchain network system 2. The distribution route monitoring node 30 is configured to store a distribution route rule database that defines distribution route rule(s) with respect to combination(s) of shipping origin(s) and shipping destination(s), receive the information from the terminals 50a, 50b, ... via the dedicated nodes 10a, 10c, ..., and monitor distribution route(s) of the target item(s) by determining whether or not a combination(s) of shipping origin and destination included in shipping information and/or receiving information in the supplied information satisfies/satisfy the distribution route rule(s).

According to Example Embodiment 3, since the role assignment node 20 assigns roles to the dedicated nodes 10a, 10c, ... and the distribution route monitoring node 30 monitors the distribution route(s) of the target item(s) in the blockchain network system 2, by viewing the result(s) thereof, it is possible to contribute to verifying inherent state(s) (fraudulence, falsification, etc.) of data objectively, neutrally, fairly, impartially, and easily when tracing collected information.

### [Example Embodiment 4]

The following describes a traceability management system relating to Example Embodiment 4 with reference to a drawing. Fig. 25 is a block diagram schematically illustrating a configuration of the traceability management system relating to Example Embodiment 4 after role assignment.

A blockchain network system 2 is configured to have nodes 10a, 10b, 10c, ..., and 20 connected to each other in a network 3 and have the nodes 10a, 10b, 10c, ..., and 20 distributedly hold same information related to target item(s).

The nodes 10a, 10b, 10c, ..., and 20 are comprised of a plurality of dedicated nodes 10a, 10b, 10c, ... and a role assignment node 20.

The dedicated nodes 10a, 10b, 10c, ... are responsible for predetermined roles. The role assignment node 20 is configured to store a role database that defines a role corresponding to each of the dedicated nodes 10a, 10b, 10c, ... and assign a role (for instance, role 1 , audit institution, role 2, ...) to each of the dedicated nodes 10a, 10b, 10c, ... on the basis of the role database to connect each of the dedicated nodes 10a, 10b, 10c, ... to at least one corresponding terminal (50a, 50b, 50c, ...) outside the blockchain network system 2. At least one (10b in Fig. 25) of the dedicated nodes 10a, 10b, 10c, ... is configured to be assigned to a role related to an audit institution(s) by the role assignment node 20, store an evaluation criterion database that associates condition(s) with evaluation(s) regarding predetermined evaluation target(s), receive the information from the terminal(s) (any of the terminals 50a, 50c, ...) via the dedicated nodes 10a, 10c, ... other than the dedicated node 10b assigned to the role related to the audit institution(s), and evaluate evaluation target(s) in the supplied information on the basis of the evaluation criterion database.

According to Example Embodiment 4, since the role assignment node 20 assigns roles to the dedicated nodes 10a, 10b, 10c, ... and the dedicated node 10b (role: audit institution) evaluates the target item(s) in the blockchain network system 2, by viewing the result(s) thereof, it is possible to contribute to verifying inherent state(s) (evaluation) of data objectively, neutrally, fairly, impartially, and easily when tracing collected information.

### [Example Embodiment 5]

The following describes a traceability management system relating to Example Embodiment 5 with reference to a drawing. Fig. 26 is a block diagram schematically illustrating a configuration of the traceability management system relating to Example Embodiment 5 after role assignment.

A blockchain network system 2 is configured to have nodes 10a, 10c, ..., and 20 connected to each other in a network 3 and have the nodes 10a, 10c, ..., and 20 distributedly hold same information related to target item(s).

The nodes 10a, 10c, ..., and 20 are comprised of a plurality of dedicated nodes 10a, 10c, ... and a role assignment node 20.

The dedicated nodes 10a, 10c, ... are responsible for predetermined roles. The role assignment node 20 is configured to store a role database that defines a role corresponding to each of the dedicated nodes 10a, 10c, ... and assign a role (for instance, role 1, role 2, ...) to each of the dedicated nodes 10a, 10c, ... on the basis of the role database to connect each of the dedicated nodes 10a, 10c, ... to at least one corresponding terminal (50a, 50c, ...) outside the blockchain network system 2.

According to Example Embodiment 5, since the role assignment node 20 assigns roles to the dedicated nodes 10a, 10c, ... in the blockchain network system 2, thereby making it impossible to organize information, evaluate the target item(s) and monitor distribution route(s) and state change(s), by viewing the result(s) thereof, it is possible to contribute to verifying inherent state(s) (evaluation, fraudulence, falsification, etc.) of data objectively, neutrally, fairly, impartially, and easily when tracing collected information.

Further, the nodes and the terminals relating to Example Embodiments 1 to 5 can be configured by so-called hardware resources (information processing apparatus, computer) and may employ a configuration illustrated in Fig. 27. For instance, hardware resources 100 comprise a processor 101, a memory 102, a network interface 103, etc., which are connected to each other by an internal bus 104. An instruction program and necessary data for operating the processor 101 are stored in the memory 102 and can be operated by externally supplying and outputting signal(s) via the network interface 103 as necessary.

Note that the configuration shown in Fig. 27 is not intended to limit the hardware configuration of the hardware resources 100. The hardware resources 100 may include hardware not shown in the drawing (for instance, an input/output interface). In addition, the number of units such as the processor 101 included in the apparatus is not limited to the example shown in Fig. 27; for instance, a plurality of the processors 101 may be included in the hardware resources 100. As the processor 101, for instance, a CPU (Central Processing Unit), an MPU (Micro Processor Unit), a GPU (Graphics Processing Unit), and the like may be used.

As the memory 102, for instance, a RAM (Random Access Memory), a ROM (Read-Only Memory), an HDD (Hard Disk Drive), an SSD (Solid State Drive), and the like may be used.

As the network interface 103, for instance, a LAN (Local Area Network) card, a network adaptor, a network interface card, and the like may be used.

The functions of the hardware resources 100 are achieved by the processing modules described above. These processing modules are realized by, for instance, having the processor 101 execute a program stored in the memory 102. Further, the program can be downloaded via a network or can be updated using a storage medium storing the program. In addition, the processing modules may be realized by a semiconductor chip. In other words, the functions performed by the processing modules may be realized by running software on some kind of hardware.

It is to be noted that it is possible to modify or adjust the example embodiments or examples within the scope of the whole disclosure of the present invention (including the Claims and the figures) and based on the basic technical concept thereof. Further, it is possible to variously combine or select (or deselect if necessary) a wide variety of the disclosed elements (including the individual elements of the individual claims, the individual elements of the individual example embodiments or examples, and the individual elements of the individual figures) within the scope of the whole disclosure of the present invention. That is, it is self-explanatory that the present invention includes any types of variations and modifications to be done by a skilled person according to the whole disclosure including the Claims and the figures, and the technical concept of the present invention. Further, any numerical values or ranges disclosed herein should be interpreted that any intermediate or lower values or subranges falling within the disclosed ranges are also disclosed even without explicit recital thereof. In addition, using some or all of the disclosed elements in each literature cited above as necessary in combination with the elements described herein as part of the disclosure of the present invention in accordance with the object of the present invention shall be considered to be included in (or belong to) the disclosed elements of the present application.

### REFERENCE SIGNS LIST

1: traceability management system
2: blockchain network system
3: P2P network (network)
10a to 10n: dedicated node (node)
11: communication part
12: storage part
13: control part
13a: certification processing section
13b: record processing section
13c: viewing processing section
13d: evaluation processing section
14: role label
15: record information database
16: evaluation criterion database
20: role assignment node (node)
21: communication part
22: storage part
23: control part
23a: role assignment section
23b: record processing section
24: role database
25: record information database
30: distribution route monitoring node (node)
31: communication part
32: storage part
33: control part
33a: distribution route monitoring section
33b: record processing section
34: distribution route rule database
35: record information database
40: state change monitoring node (node)
41: communication part
42: storage part
43: control part
43a: state change monitoring section
43b: record processing section
44: state change rule database
45: record information database
50a to 50i: terminal
51: communication part
52: storage part
53: input part
54: display part
55: control part
60: role management terminal (terminal)
70: distribution route management terminal (terminal)
80: state change management terminal (terminal)
90: network
100: hardware resources
101: processor
102: memory
103: network interface
104: internal bus

## Claims

1. A blockchain network system, configured to have nodes connected to each other in a network and have the nodes distributedly hold same information related to target item(s), wherein
the nodes are comprised of:
a plurality of dedicated nodes responsible for predetermined roles;
a role assignment node configured to store a role database that defines a role corresponding to each of the dedicated nodes and assign a role to each of the dedicated nodes on the basis of the role database to connect each of the dedicated nodes to at least one corresponding terminal outside the blockchain network system; and
a state change monitoring node configured to store a state change rule database that defines rule(s) regarding change in a state of the target item(s) between a time of receipt and a time of shipment, receive information from terminal(s) via the dedicated node(s), and monitor change in the state of the target item(s) by determining whether or not a state change(s) based on corresponding receiving and shipping information in supplied information satisfies/satisfy the state change rule(s).

2. The blockchain network system according to Claim 1, wherein
the state change monitoring node is configured to transmit to the corresponding terminal(s) alert information for drawing attention and for notifying that the state change(s) based on the receiving information and the shipping information is/are not normal when the state change(s) does/do not satisfy the state change rule(s) defined in the state change rule database.

3. The blockchain network system according to Claim 2, wherein
the state change monitoring node is configured to record the alert information in association with the receiving information and/or the shipping information distributedly held in the nodes.

4. The blockchain network system according to Claim 2, wherein
the state change monitoring node is configured to record the receiving information and the shipping information distributedly held in the nodes in association with certification information indicating conformity to the state change rule(s) when the state change(s) based on the receiving information and the shipping information satisfies/satisfy the state change rule(s) defined in the state change rule database.

5. The blockchain network system according to Claim 1, wherein
the state change monitoring node is configured to transmit alert information for drawing attention and for notifying that a state change(s) is/are not normal when there is no receiving information corresponding to the shipping information.

6. A blockchain network system, configured to have nodes connected to each other in a network and have the nodes distributedly hold same information related to target item(s), wherein
the nodes are comprised of:
a plurality of dedicated nodes responsible for predetermined roles;
a role assignment node configured to store a role database that defines a role corresponding to each of the dedicated nodes and assign a role to each of the dedicated nodes on the basis of the role database to connect each of the dedicated nodes to at least one corresponding terminal outside the blockchain network system; and
a distribution route monitoring node configured to store a distribution route rule database that defines distribution route rule(s) with respect to combination(s) of shipping origin(s) and shipping destination(s), receive information from terminal(s) via the dedicated node(s), and monitor distribution route(s) of the target item(s) by determining whether or not a combination(s) of shipping origin and destination included in shipping information and/or receiving information in supplied information satisfies/satisfy the distribution route rule(s).

7. The blockchain network system according to Claim 6, wherein
the distribution route monitoring node is configured to transmit to the corresponding terminal(s) alert information for drawing attention and for notifying the shipping information and/or the receiving information distributedly held in the nodes that a distribution route(s) is/are not normal when a combination(s) of the shipping origin and destination in the shipping information and/or the receiving information does/do not satisfy the distribution route rule(s).

8. The blockchain network system according to Claim 7, wherein
the distribution route monitoring node is configured to record the alert information in association with the receiving information and/or the shipping information distributedly held in the nodes.

9. The blockchain network system according to Claim 7, wherein
the distribution route monitoring node is configured to record certification information indicating conformity to the distribution route rule(s) in association with the shipping information and/or the receiving information distributedly held in the nodes when a combination(s) of the shipping origin and destination in the shipping information and/or the receiving information satisfies/satisfy the distribution route rule(s).

10. The blockchain network system according to Claim 6, wherein
each of the receiving information and the shipping information includes data related to quantity, and
the distribution route monitoring node is configured to transmit to the corresponding terminal(s) alert information for drawing attention and for notifying that a distribution route(s) is/are not normal when the quantities in the shipping information and the receiving information do not match, or when the quantity in the shipping information or the receiving information exceeds a predetermined amount.

11. The blockchain network system according to Claim 6, wherein
each of the shipping information and the receiving information includes data related to date and time, and
the distribution route monitoring node is configured to transmit to the corresponding terminal(s) alert information for drawing attention and for notifying that a distribution route(s) is/are not normal when a time period between a date and a time of the shipping information and a date and a time of the receiving information exceeds a predetermined period of time.

12. The blockchain network system according to Claim 6, wherein
the shipping information includes data related to date and time, and
the distribution route monitoring node is configured to transmit to the corresponding terminal(s) alert information for drawing attention and for notifying that a distribution route(s) is/are not normal when corresponding receiving information cannot be received within a predetermined period of time from the date and the time of the shipping information.

13. A blockchain network system, configured to have nodes connected to each other in a network and have the nodes distributedly hold same information related to target item(s), wherein
the nodes are comprised of:
a plurality of dedicated nodes responsible for predetermined roles; and
a role assignment node configured to store a role database that defines a role corresponding to each of the dedicated nodes and assign a role to each of the dedicated nodes on the basis of the role database to connect each of the dedicated nodes to at least one corresponding terminal outside the blockchain network system, and
at least one of the dedicated nodes is configured to be assigned to a role related to an audit institution(s) by the role assignment node, store an evaluation criterion database that associates condition(s) with evaluation(s) regarding predetermined evaluation target(s), receive the information from the terminal(s) via the dedicated nodes other than the dedicated node assigned to the role related to the audit institution(s), and evaluate evaluation target(s) in supplied information on the basis of evaluation criterion database.

14. The blockchain network system according to Claim 13, wherein
the dedicated node assigned to the role related to the audit institution(s) is configured to record evaluation information including an evaluation result(s) in association with information distributedly held in the nodes.

15. A traceability management system, comprising:
a blockchain network system according to any one of Claims 1 to 14;
a role management terminal configured to be connected to the role assignment node; and
a plurality of terminals configured to be connected to corresponding ones of the dedicated nodes assigned to roles by the role management terminal.

## Patentansprüche

1. Ein Blockchain-Netzwerksystem, das dazu konfiguriert ist, in einem Netzwerk miteinander verbundene Knoten aufzuweisen und die Knoten dieselben Informationen in Bezug auf (einen) Zielgegenstand/-gegenstände verteilt halten zu lassen, wobei
die Knoten bestehen aus:
einer Vielzahl von dedizierten Knoten, die für vorbestimmte Rollen verantwortlich sind;
einem Rollenzuweisungsknoten, der dazu konfiguriert ist, eine Rollendatenbank zu speichern, die eine jedem der dedizierten Knoten entsprechende Rolle definiert, und jedem der dedizierten Knoten auf der Basis der Rollendatenbank eine Rolle zuzuweisen, um jeden der dedizierten Knoten mit mindestens einem entsprechenden Endgerät außerhalb des Blockchain-Netzwerksystems zu verbinden; und
einem Zustandsänderungs-Überwachungsknoten, der dazu konfiguriert ist, eine Zustandsänderungs-Regeldatenbank zu speichern, die (eine) Regel(n) bezüglich einer Änderung eines Zustands des Zielgegenstands/der Zielgegenstände zwischen einem Eingangszeitpunkt und einem Versandzeitpunkt definiert, Informationen von (einem) Endgerät(en) über den/die dedizierten Knoten zu empfangen und eine Änderung des Zustands des Zielgegenstands/der Zielgegenstände zu überwachen, indem er bestimmt, ob (eine) auf entsprechenden Eingangs- und Versandinformationen in zugeführten Informationen basierende Zustandsänderung(en) der/den Zustandsänderungsregel(n) genügt/genügen oder nicht.

2. Das Blockchain-Netzwerksystem nach Anspruch 1, wobei
der Zustandsänderungs-Überwachungsknoten dazu konfiguriert ist, Alarminformationen zum Erregen von Aufmerksamkeit und zur Mitteilung, dass die auf den Eingangsinformationen und den Versandinformationen basierende(n) Zustandsänderung(en) nicht normal ist/sind, an das/die entsprechende(n) Endgerät(e) zu übertragen, wenn die Zustandsänderung(en) der/den in der Zustandsänderungs-Regeldatenbank definierten Zustandsänderungsregel(n) nicht genügt/genügen.

3. Das Blockchain-Netzwerksystem nach Anspruch 2, wobei
der Zustandsänderungs-Überwachungsknoten dazu konfiguriert ist, die Alarminformationen in Zuordnung zu den in den Knoten verteilt gehaltenen Eingangsinformationen und/oder Versandinformationen aufzuzeichnen.

4. Das Blockchain-Netzwerksystem nach Anspruch 2, wobei
der Zustandsänderungs-Überwachungsknoten dazu konfiguriert ist, die in den Knoten verteilt gehaltenen Eingangsinformationen und Versandinformationen in Zuordnung zu Zertifizierungsinformationen aufzuzeichnen, die eine Konformität mit der/den Zustandsänderungsregel(n) angeben, wenn die auf den Eingangsinformationen und den Versandinformationen basierende(n) Zustandsänderung(en) der/den in der Zustandsänderungs-Regeldatenbank definierten Zustandsänderungsregel(n) genügt/genügen.

5. Das Blockchain-Netzwerksystem nach Anspruch 1, wobei
der Zustandsänderungs-Überwachungsknoten dazu konfiguriert ist, Alarminformationen zum Erregen von Aufmerksamkeit und zur Mitteilung, dass eine Zustandsänderung(en) nicht normal ist/sind, zu übertragen, wenn es keine den Versandinformationen entsprechenden Eingangsinformationen gibt.

6. Ein Blockchain-Netzwerksystem, das dazu konfiguriert ist, in einem Netzwerk miteinander verbundene Knoten aufzuweisen und die Knoten dieselben Informationen in Bezug auf (einen) Zielgegenstand/-gegenstände verteilt halten zu lassen, wobei
die Knoten bestehen aus:
einer Vielzahl von dedizierten Knoten, die für vorbestimmte Rollen verantwortlich sind;
einem Rollenzuweisungsknoten, der dazu konfiguriert ist, eine Rollendatenbank zu speichern, die eine jedem der dedizierten Knoten entsprechende Rolle definiert, und jedem der dedizierten Knoten auf der Basis der Rollendatenbank eine Rolle zuzuweisen, um jeden der dedizierten Knoten mit mindestens einem entsprechenden Endgerät außerhalb des Blockchain-Netzwerksystems zu verbinden; und
einem Vertriebsweg-Überwachungsknoten, der dazu konfiguriert ist, eine Vertriebsweg-Regeldatenbank zu speichern, die (eine) Vertriebswegregel(n) in Bezug auf (eine) Kombination(en) von Versandursprung/-ursprüngen und Versandziel(en) definiert, Informationen von (einem) Endgerät(en) über den/die dedizierten Knoten zu empfangen und (einen) Vertriebsweg(e) des Zielgegenstands/der Zielgegenstände zu überwachen, indem er bestimmt, ob (eine) in Versandinformationen und/oder Eingangsinformationen in zugeführten Informationen enthaltene Kombination(en) von Versandursprung und -ziel der/den Vertriebswegregel(n) genügt/genügen oder nicht.

7. Das Blockchain-Netzwerksystem nach Anspruch 6, wobei
der Vertriebsweg-Überwachungsknoten dazu konfiguriert ist, Alarminformationen zum Erregen von Aufmerksamkeit und zur Mitteilung bezüglich der in den Knoten verteilt gehaltenen Versandinformationen und/oder Eingangsinformationen, dass ein Vertriebsweg(e) nicht normal ist/sind, an das/die entsprechende(n) Endgerät(e) zu übertragen, wenn eine Kombination(en) des Versandursprungs und -ziels in den Versandinformationen und/oder den Eingangsinformationen der/den Vertriebswegregel(n) nicht genügt/genügen.

8. Das Blockchain-Netzwerksystem nach Anspruch 7, wobei
der Vertriebsweg-Überwachungsknoten dazu konfiguriert ist, die Alarminformationen in Zuordnung zu den in den Knoten verteilt gehaltenen Eingangsinformationen und/oder Versandinformationen aufzuzeichnen.

9. Das Blockchain-Netzwerksystem nach Anspruch 7, wobei
der Vertriebsweg-Überwachungsknoten dazu konfiguriert ist, Zertifizierungsinformationen, die eine Konformität mit der/den Vertriebswegregel(n) angeben, in Zuordnung zu den in den Knoten verteilt gehaltenen Versandinformationen und/oder Eingangsinformationen aufzuzeichnen, wenn eine Kombination(en) des Versandursprungs und -ziels in den Versandinformationen und/oder den Eingangsinformationen der/den Vertriebswegregel(n) genügt/genügen.

10. Das Blockchain-Netzwerksystem nach Anspruch 6, wobei
jede der Eingangsinformationen und der Versandinformationen Daten bezüglich einer Menge beinhaltet, und
der Vertriebsweg-Überwachungsknoten dazu konfiguriert ist, Alarminformationen zum Erregen von Aufmerksamkeit und zur Mitteilung, dass ein Vertriebsweg(e) nicht normal ist/sind, an das/die entsprechende(n) Endgerät(e) zu übertragen, wenn die Mengen in den Versandinformationen und den Eingangsinformationen nicht übereinstimmen, oder wenn die Menge in den Versandinformationen oder den Eingangsinformationen einen vorbestimmten Betrag überschreitet.

11. Das Blockchain-Netzwerksystem nach Anspruch 6, wobei
jede der Versandinformationen und der Eingangsinformationen Daten bezüglich Datum und Uhrzeit beinhaltet, und
der Vertriebsweg-Überwachungsknoten dazu konfiguriert ist, Alarminformationen zum Erregen von Aufmerksamkeit und zur Mitteilung, dass ein Vertriebsweg(e) nicht normal ist/sind, an das/die entsprechende(n) Endgerät(e) zu übertragen, wenn eine Zeitspanne zwischen einem Datum und einer Uhrzeit der Versandinformationen und einem Datum und einer Uhrzeit der Eingangsinformationen eine vorbestimmte Zeitspanne überschreitet.

12. Das Blockchain-Netzwerksystem nach Anspruch 6, wobei
die Versandinformationen Daten bezüglich Datum und Uhrzeit beinhalten, und
der Vertriebsweg-Überwachungsknoten dazu konfiguriert ist, Alarminformationen zum Erregen von Aufmerksamkeit und zur Mitteilung, dass ein Vertriebsweg(e) nicht normal ist/sind, an das/die entsprechende(n) Endgerät(e) zu übertragen, wenn entsprechende Eingangsinformationen nicht innerhalb einer vorbestimmten Zeitspanne ab dem Datum und der Uhrzeit der Versandinformationen empfangen werden können.

13. Ein Blockchain-Netzwerksystem, das dazu konfiguriert ist, in einem Netzwerk miteinander verbundene Knoten aufzuweisen und die Knoten dieselben Informationen in Bezug auf (einen) Zielgegenstand/-gegenstände verteilt halten zu lassen, wobei
die Knoten bestehen aus:
einer Vielzahl von dedizierten Knoten, die für vorbestimmte Rollen verantwortlich sind; und
einem Rollenzuweisungsknoten, der dazu konfiguriert ist, eine Rollendatenbank zu speichern, die eine jedem der dedizierten Knoten entsprechende Rolle definiert, und jedem der dedizierten Knoten auf der Basis der Rollendatenbank eine Rolle zuzuweisen, um jeden der dedizierten Knoten mit mindestens einem entsprechenden Endgerät außerhalb des Blockchain-Netzwerksystems zu verbinden, und
mindestens einer der dedizierten Knoten dazu konfiguriert ist, durch den Rollenzuweisungsknoten einer Rolle in Bezug auf (eine) Prüfinstitution(en) zugewiesen zu werden, eine Bewertungskriterien-Datenbank zu speichern, die (eine) Bedingung(en) mit (einer) Bewertung(en) hinsichtlich (eines) vorbestimmten Bewertungsziels/Bewertungsziele verknüpft, die Informationen von dem/den Endgerät(en) über die dedizierten Knoten außer dem dedizierten Knoten, der der Rolle in Bezug auf die Prüfinstitution(en) zugewiesen ist, zu empfangen und (ein) Bewertungsziel(e) in zugeführten Informationen auf der Basis der Bewertungskriterien-Datenbank zu bewerten.

14. Das Blockchain-Netzwerksystem nach Anspruch 13, wobei
der der Rolle in Bezug auf die Prüfinstitution(en) zugewiesene dedizierte Knoten dazu konfiguriert ist, Bewertungsinformationen, die (ein) Bewertungsergebnis(se) beinhalten, in Zuordnung zu in den Knoten verteilt gehaltenen Informationen aufzuzeichnen.

15. Ein Rückverfolgbarkeits-Managementsystem, umfassend:
ein Blockchain-Netzwerksystem nach einem der Ansprüche 1 bis 14;
ein Rollenmanagement-Endgerät, das dazu konfiguriert ist, mit dem Rollenzuweisungsknoten verbunden zu sein; und
eine Vielzahl von Endgeräten, die dazu konfiguriert sind, mit entsprechenden der dedizierten Knoten verbunden zu sein, denen durch das Rollenmanagement-Endgerät Rollen zugewiesen sind.

## Revendications

1. Système de réseau de chaîne de blocs, configuré pour avoir des nœuds connectés les uns aux autres dans un réseau et dont les nœuds détiennent de manière distribuée les mêmes informations liées à un ou plusieurs élément(s) cible(s), dans lequel
les nœuds comportent :
une pluralité de nœuds dédiés ayant des rôles prédéterminés ;
un nœud d'attribution de rôle configuré pour stocker une base de données de rôles qui définit un rôle correspondant à chacun des nœuds dédiés et attribuer un rôle à chacun des nœuds dédiés sur la base de la base de données de rôles pour connecter chacun des nœuds dédiés à au moins un terminal correspondant en dehors du système de réseau de chaîne de blocs ; et
un nœud de surveillance de changement d'état configuré pour stocker une base de données de règles de changement d'état qui définit une ou plusieurs règle(s) concernant le changement d'état du ou des élément(s) cible(s) entre un instant de réception et un instant d'expédition, recevoir des informations à partir d'un ou de plusieurs terminaux via le ou les nœud(s) dédié(s), et surveiller un changement d'état du ou des élément(s) cible(s) en déterminant si un ou plusieurs changement(s) d'état sur la base d'informations de réception et d'expédition correspondantes dans des informations fournies satisfont à la ou aux règle(s) de changement d'état.

2. Système de réseau de chaîne de blocs selon la revendication 1, dans lequel
le nœud de surveillance de changement d'état est configuré pour transmettre au ou aux terminaux correspondants des informations d'alerte pour attirer l'attention et pour notifier que le ou les changement(s) d'état sur la base des informations de réception et des informations d'expédition ne sont pas normaux lorsque le ou les changement(s) d'état ne satisfont pas à la ou aux règle(s) de changement d'état définies dans la base de données de règles de changement d'état.

3. Système de réseau de chaîne de blocs selon la revendication 2, dans lequel
le nœud de surveillance de changement d'état est configuré pour enregistrer les informations d'alerte en association avec les informations de réception et/ou les informations d'expédition détenues de manière distribuée dans les nœuds.

4. Système de réseau de chaîne de blocs selon la revendication 2, dans lequel
le nœud de surveillance de changement d'état est configuré pour enregistrer les informations de réception et les informations d'expédition détenues de manière distribuée dans les nœuds en association avec des informations de certification indiquant la conformité à la ou aux règle(s) de changement d'état lorsque le ou les changement(s) d'état sur la base des informations de réception et des informations d'expédition satisfont à la ou aux règle(s) de changement d'état définies dans la base de données de règles de changement d'état.

5. Système de réseau de chaîne de blocs selon la revendication 1, dans lequel
le nœud de surveillance de changement d'état est configuré pour transmettre des informations d'alerte pour attirer l'attention et pour notifier qu'un ou plusieurs changement(s) d'état ne sont pas normaux lorsqu'il n'existe aucune information de réception correspondant aux informations d'expédition.

6. Système de réseau de chaîne de blocs, configuré pour avoir des nœuds connectés les uns aux autres dans un réseau et dont les nœuds détiennent de manière distribuée les mêmes informations liées à un ou plusieurs élément(s) cible(s), dans lequel
les nœuds comportent :
une pluralité de nœuds dédiés ayant des rôles prédéterminés ;
un nœud d'attribution de rôle configuré pour stocker une base de données de rôles qui définit un rôle correspondant à chacun des nœuds dédiés et attribuer un rôle à chacun des nœuds dédiés sur la base de la base de données de rôles pour connecter chacun des nœuds dédiés à au moins un terminal correspondant en dehors du système de réseau de chaîne de blocs ; et
un nœud de surveillance d'itinéraire de distribution configuré pour stocker une base de données de règles d'itinéraire de distribution qui définit une ou plusieurs règle(s) d'itinéraire de distribution par rapport à une ou plusieurs combinaison(s) d'origine(s) d'expédition et de destination(s) d'expédition, recevoir des informations à partir d'un ou de plusieurs terminaux via le ou les nœud(s) dédié(s), et surveiller un ou plusieurs itinéraire(s) de distribution du ou des article(s) cible(s) en déterminant si une ou plusieurs combinaison(s) de l'origine et de la destination d'expédition incluses dans des informations d'expédition et/ou des informations de réception dans les informations fournies satisfont ou non à la ou aux règle(s) d'itinéraire de distribution.

7. Système de réseau de chaîne de blocs selon la revendication 6, dans lequel
le nœud de surveillance d'itinéraire de distribution est configuré pour transmettre au ou aux terminaux correspondants des informations d'alerte pour attirer l'attention et pour notifier les informations d'expédition et/ou les informations de réception détenues de manière distribuée dans les nœuds indiquant qu'un ou plusieurs itinéraire(s) de distribution ne sont pas normaux lorsqu'une ou plusieurs combinaison(s) de l'origine et de la destination d'expédition dans les informations d'expédition et/ou les informations de réception satisfont/ne satisfont pas à la ou aux règle(s) d'itinéraire de distribution.

8. Système de réseau de chaîne de blocs selon la revendication 7, dans lequel
le nœud de surveillance d'itinéraire de distribution est configuré pour enregistrer les informations d'alerte en association avec les informations de réception et/ou les informations d'expédition détenues de manière distribuée dans les nœuds.

9. Système de réseau de chaîne de blocs selon la revendication 7, dans lequel
le nœud de surveillance d'itinéraire de distribution est configuré pour enregistrer des informations de certification indiquant la conformité à la ou aux règle(s) d'itinéraire de distribution en association avec les informations d'expédition et/ou les informations de réception détenues de manière distribuée dans les nœuds lorsqu'une ou plusieurs combinaison(s) de l'origine et de la destination d'expédition dans les informations d'expédition et/ou les informations de réception satisfont à la ou aux règle(s) d'itinéraire de distribution.

10. Système de réseau de chaîne de blocs selon la revendication 6, dans lequel
chacune des informations de réception et des informations d'expédition inclut des données liées à la quantité, et
le nœud de surveillance d'itinéraire de distribution est configuré pour transmettre au ou aux terminaux correspondants des informations d'alerte pour attirer l'attention et pour notifier qu'un ou plusieurs itinéraire(s) de distribution ne sont pas normaux lorsque les quantités dans les informations d'expédition et les informations de réception ne correspondent pas entre elles, ou lorsque la quantité dans les informations d'expédition ou les informations de réception dépasse une quantité prédéterminée.

11. Système de réseau de chaîne de blocs selon la revendication 6, dans lequel
chacune des informations d'expédition et des informations de réception inclut des données relatives à la date et l'heure, et
le nœud de surveillance d'itinéraire de distribution est configuré pour transmettre au ou aux terminaux correspondants des informations d'alerte pour attirer l'attention et pour notifier qu'un ou plusieurs itinéraire(s) de distribution ne sont pas normaux lorsqu'une période de temps entre une date et une heure des informations d'expédition et une date et une heure des informations de réception dépasse une période de temps prédéterminée.

12. Système de réseau de chaîne de blocs selon la revendication 6, dans lequel
les informations d'expédition incluent des données relatives à la date et à l'heure, et
le nœud de surveillance d'itinéraire de distribution est configuré pour transmettre aux terminaux correspondants des informations d'alerte pour attirer l'attention et pour notifier qu'un ou plusieurs itinéraire(s) de distribution ne sont pas normaux lorsque des informations de réception correspondantes ne peuvent pas être reçues dans une période de temps prédéterminée à partir de la date et de l'heure des informations d'expédition.

13. Système de réseau de chaîne de blocs, configuré pour avoir des nœuds connectés les uns aux autres dans un réseau et dont les nœuds détiennent de manière distribuée les mêmes informations liées à un ou plusieurs élément(s) cible(s), dans lequel
les nœuds comportent :
une pluralité de nœuds dédiés ayant des rôles prédéterminés ; et
un nœud d'attribution de rôle configuré pour stocker une base de données de rôles qui définit un rôle correspondant à chacun des nœuds dédiés et attribuer un rôle à chacun des nœuds dédiés sur la base de la base de données de rôles pour connecter chacun des nœuds dédiés à au moins un terminal correspondant en dehors du système de réseau de chaîne de blocs, et
au moins un des nœuds dédiés est configuré pour être affecté à un rôle lié à une ou plusieurs institution(s) d'audit par le nœud d'attribution de rôle, stocker une base de données de critères d'évaluation qui associe une ou plusieurs condition(s) à une ou plusieurs évaluation(s) concernant une ou plusieurs cible(s) d'évaluation prédéterminée(s), recevoir les informations à partir du ou des terminaux via les nœuds dédiés autres que le nœud dédié affecté au rôle lié à l'institution ou aux institutions d'audit, et évaluer une ou plusieurs cible(s) d'évaluation dans les informations fournies sur la base de la base de données de critères d'évaluation.

14. Système de réseau de chaîne de blocs selon la revendication 13, dans lequel
le nœud dédié affecté au rôle lié à l'institution ou aux institutions d'audit est configuré pour enregistrer des informations d'évaluation incluant un ou plusieurs résultat(s) d'évaluation en association avec des informations détenues de manière distribuée dans les nœuds.

15. Système de gestion de traçabilité comportant :
un système de réseau de chaîne de blocs selon l'une quelconque des revendications 1 à 14 ;
un terminal de gestion de rôle configuré pour être connecté au nœud d'attribution de rôle ; et
une pluralité de terminaux configurés pour être connectés à des nœuds correspondants parmi les nœuds dédiés affectés à des rôles par le terminal de gestion de rôle.
